# EUROPÄISCHE PATENTSCHRIFT

(11) **EP 1 141 094 B1**
(45) Veröffentlichungstag und Bekanntmachung des Hinweises auf die Patenterteilung: **24.07.2002**
(21) Anmeldenummer: 99964662.3
(22) Anmeldetag: 22.12.1999
(51) Int. Cl.: C08G 77/48, C08L 83/14

(54) **VERNETZBARE MONOMERE AUF CYCLOSILOXANBASIS, DEREN HERSTELLUNG UND DEREN VERWENDUNG IN POLYMERISIERBAREN MASSEN**
CYCLOSILOXANE-BASED CROSS-LINKABLE MONOMERS, PRODUCTION THEREOF AND USE THEREOF IN POLYMERISABLE MATERIALS
MONOMERES RETICULABLES A BASE DE CYCLOSILOXANE, LEUR PREPARATION ET LEUR UTILISATION DANS DES MATIERES POLYMERISABLES

(30) Priorität: 24.12.1998 DE 19860361
(43) Veröffentlichungstag der Anmeldung: 10.10.2001
(73) Patentinhaber: 3M Espe AG, 82229 Seefeld (DE)
(72) Erfinder: BISSINGER, Peter, D-86911 Diessen (DE); GASSER, Oswald, D-82229 Seefeld (DE); GUGGENBERGER, Rainer, D-82211 Herrsching (DE); SOGLOWEK, Wolfgang, D-86911 Diessen-Obermühlhausen (DE); ECKHARDT, Gunther, D-06231 Bad Dürrenberg (DE)
(74) Vertreter: Freiherr von Wittgenstein, Arved, Dr.
(86) Internationale Anmeldenummer: EP9910318
(87) Internationale Veröffentlichungsnummer: WO0042092

(56) Entgegenhaltungen:
- EP-A- 0 238 025
- EP-A- 0 381 961
- EP-A- 0 475 437

## Beschreibung

Die Erfindung betrifft Polysiloxane aus vemetzbaren Monomeren auf Cyclosiloxanbasis und deren Verwendung in polymerisierbaren Massen. Insbesondere betrifft die Erfindung Polysiloxane aus Sol-Gel-kondensierbaren Cyclosiloxan(meth)acrylaten sowie harzartige Zusammensetzungen, erhältlich durch hydrolytische Kondensation eines oder mehrerer hydrolysierbarer und kondensierbarer Cyclosiloxan(meth)acrylate.

### Stand der Technik

Nicht-cyclische Sol-Gel-kondensierbare Siloxane sowie Polykondensate auf der Basis hydrolytisch kondensierbarer Siloxane für den Einsatz im Lackbereich sind bereits aus der EP-0 450 624-A2 bekannt. Durch die Struktur dieser Verbindungen bedingt, eignen sich diese besonders zur Herstellung von Beschichtungsmitteln, Klebstoffen und Dichtungsmassen.

Kieselsäure(hetero)polykondensate, die mit organischen Gruppen modifiziert sind, sowie Verfahren zu deren Herstellung sind bereits in großer Zahl bekannt (DE-A-38 35 968, DE-A-40 11 045). Derartige Kondensate finden für die verschiedensten Zwecke Verwendung, beispielsweise als Formmassen, Lacke und Überzüge.

Aus der EP-A-0 475 437 sind kondensierbare monomere cyclische Siloxane bekannt. Im Rahmen der Lehre dieser Druckschrift werden die beschriebenen Siloxane allerdings nicht kondensiert, sondern als Kupplungsmittel eingesetzt.

Aufgrund der vielfältigen Anwendungsmöglichkeiten dieser Substanzklasse besteht ein ständiges Bedürfnis nach Modifizierung der bereits bekannten Verbindungen, um neue Anwendungsgebiete zu erschließen und um deren Eigenschaften für bestimmte Zwecke zu optimieren.

Im Dentalbereich besteht besonders die Anforderung nach schrumpfarmen, durch radikalische Polymerisation aushärtbaren Massen mit guten physikalischen Parametern, wie Biege- und Druckfestigkeit und Härte. Ein ständiger Bedarf besteht auch nach Mischungen, die eine toxikologisch unbedenkliche Menge an Restmonomeren, also solchen Monomeren, die nicht im polymerisierten Netzwerk eingebunden sind, besitzen.

### Aufgabenstellung

Der Erfindung liegt die Aufgabe zugrunde, eine neue Klasse von Polymeren zur Verfügung zu stellen, die sich besonders für den Einsatz im dentalen Gebiet eignen. Ebenso soll es möglich sein, aus den entsprechenden Monomeren harzartige Zusammensetzungen, die - gegebenfalls in Anwesenheit von Initatoren - photochemisch, thermisch oder chemisch aushärtbar sind, herzustellen.

### Lösung

Erfindungsgemäß wird diese Aufgabe gelöst durch Polysiloxane auf der Basis von cyclischen Siloxanen, die Sol-Gel-kondensierbare Gruppen und gleichzeitig radikalisch polymerisierbare Gruppen besitzen und somit eine Einbindung in ein dreidimensionales Netzwerk aus Füllstoffen, die gegebenenfalls oberflächenbehandelt sind, und aus gegebenenfalls weiteren reaktiven Monomeren ermöglichen.

Ungewöhnlich und überraschend zugleich ist der Sachverhalt, daß trotz allgemein niedriger Viskosität der als Ausgangssubstanzen verwendeten Siloxane, Massen mit hohen Druck- und Biegefestigkeiten erhalten werden können.

Die Verwendung von cyclisch-anorganischen, im Gegensatz zu linearen oder verzweigten organischen Verbindungen ist unter anderem vorteilhaft, da diese ein relativ wenig kompressibles, chemisch stabiles Netzwerk ergeben. Die Substituenten an der zentralen Ringstruktur sind gleichmäßig in die Raumrichtungen orientiert, was zu einem äußerst homogenen Netzwerk führt. Bruchstellen können dadurch vermieden werden.

Besonders interessante Eigenschaften lassen sich durch Cokondensate der erfindungsgemäßen Monomere auf Cyclosiloxanbasis mit organischen Monomeren, die beispielsweise in der EP-0 450 624-A2 beschrieben sind, erhalten. Insbesondere läßt sich der Vernetzungsgrad des ausgehärteten, radikalisch polymerisierten Werkstoffes erhöhen.

Solche Co-Kondensate lassen sich als Co- und Terpolymere von Hydrolysaten (führt zu randomisierten Co- und Terpolymeren) oder Vorkondensate (führt zu Block-Cound -Ter-polymeren) von Vertretern der Formeln (1) mit (2) sowie (7), (8) oder (9) auffassen. Hierin sind beide Möglichkeiten gemeint. Diese Co- und Terkondensate gehorchen der später angeführten allgemeinen Formel (1a).

### Definitionen

Unter den Begriffen Alkyl bzw. Alkylrest, Alkenyl bzw. Alkenylrest und Aryl bzw. Arylrest sind nachfolgend die im Rahmen dieser Erfindung zu verstehenden Definitionen angegeben.

Für Alkyl sind beispielsweise geradkettige, verzweigte oder cyclische Reste mit 1 bis 20, vorzugsweise 1 bis 10 Kohlenstoffatomen und vorzugsweise niedere Alkylreste mit 1 bis 6, vorzugsweise 1 bis 4 Kohlenstoffatomen denkbar.
Besonders bevorzugte Alkylreste im allgemeinen sind geradkettige oder verzweigte oder cyclische Reste, wie Methyl, Ethyl, n-Propyl, Isopropyl, n-Butyl, sek.-Butyl, Isobutyl, n-Pentyl, n-Hexyl, Cyclohexyl, 2-Ethylhexyl, Dodecyl, Octadecyl.

Als Alkenylreste sind beispielsweise geradkettige, verzweigte oder cyclische Reste mit 2 bis 20, vorzugsweise 2 bis 10 Kohlenstoffatomen und vorzugsweise niedere Alkenylreste mit 2 bis 6 Kohfenstoffatomen denkbar.
Bevorzugte Alkenylreste sind geradkettige oder verzweigte oder cyclische Reste, wie Vinyl, Allyl, und 2-Butenyl.

Als Arylreste sind solche mit 6 bis 18, bevorzugt 6 bis 12 C-Atomen zu verstehen. Bevorzugte Definitionen für Arylreste sind Phenyl, Biphenyl und Naphthyl.

Im Laufe der Erfindung erwähnte Alkoxy-, Acyloxy-, Alkylamino-, Dialkylamino-, Alkylcarbonyl-, Alkoxycarbonyl-, Arylalkyl-, Alkylaryl-, Alkylen-, Arylen- und Alkylenarylenreste leiten sich vorzugsweise von den oben genannten Alkyl- und Arylresten ab.
Spezielle Beispiele sind Methoxy, Ethoxy, n- und i-Propoxy, n-, i-, sek- und tert-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Alle genannten Reste können gegebenenfalls einen oder mehrere Substituenten tragen, beispielsweise Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Fomzyl, Carboxy, Mercapto, Cyano, Nitro, Epoxy, SO₃H oder PO₃H₂.
Unter den Halogenen sind Fluor, Chlor und Brom und insbesondere Chlor bevorzugt.

### Detaillierte Beschreibung der Erfindung

Die erfindungsgemäßen Polysiloxane sind erhältlich durch Sol-Gel-Kondensation von
- A1.: 60 bis 100 Mol-%, bezogen auf das Kondensat aus A1, A2 und A3, Monomeren oder Präkondensaten von Sol-Gel-kondensierbaren cyclischen Siloxanen der allgemeinen Formel (1), 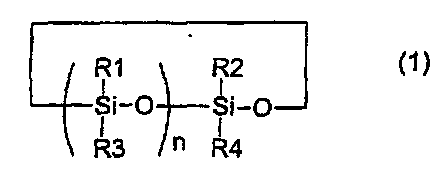 in der die Variablen wie folgt definiert sind:
R¹, R²: Alkyl mit 1 bis 10, bevorzugt 1 bis 5 C-Atomen, Alkenyl mit 1 bis 10, bevorzugt 1 bis 5 C-Atomen, Fluoralkyl mit 1 bis 10, bevorzugt 1 bis 5 C-Atomen, Cycloalkyl mit 3 bis 12, bevorzugt 5 bis 12 C-Atomen, Aryl mit 6 bis 18, bevorzugt 6 bis 12 C-Atomen,
R³: R⁵-Z,
R⁴: R⁶-(A-R⁶)_{c}-SiXₐR⁷_{b},
R⁵, R⁶: Alkylen linear oder verzweigt mit 1 bis 10, bevorzugt 2 bis 6 C-Atomen, Alkenylen linear oder verzweigt mit 1 bis 10, bevorzugt 2 bis 6 C-Atomen, Cycloalkylen mit 3 bis 12, bevorzugt 5 bis 8 C-Atomen, Cycloalkenylen mit 3 bis 12, bevorzugt 5 bis 8 C-Atomen, Alkarylen mit 6 bis 18, bevorzugt 6 bis 12 C-Atomen mit bis zu 3 Heteroatomen aus der Gruppe O, N, S,
R⁷: Alkyl mit 1 bis 10, bevorzugt 1 bis 5 C-Atomen, Alkenyl mit 1 bis 10, bevorzugt 1 bis 5 C-Atomen, Aryl mit 6 bis 18, bevorzugt 6 bis 12 C-Atomen, Alkylaryl mit 6 bis 24, bevorzugt 6 bis 18 C-Atomen, Arylalkyl mit 6 bis 24, bevorzugt 6 bis 18 C-Atomen,
Z: ein geradkettiger, verzweigter oder cyclischer organischer Rest mit mindestens einer C=C-Doppelbindung oder mindestens einer Epoxid-Funktion und mindestens 4 bis 50 Kohlenstoffatomen und bis zu 10 Heteroatomen aus der Gruppe O, N und S, wobei Z vorzugsweise OC(O)CH=CH₂, OC(O)C(Me)=CH₂, Vinylcyclopropyl, Norbomenyl, Oxetanyl, 3,4-Epoxycyclohexyl und Alkenyl linear oder verzweigt mit 1 bis 20, vorzugsweise 2 bis 6 C-Atomen ist,
A : O, S, NHC(O)O, NHC(O)NR⁸, OC(O)NH, OC(O), C(O)O,
X: H, Halogen, Hydroxy, Acyloxy, Alkylcarbonyl, NR⁸₂, Alkoxy, Alkoxycarbonyl, wobei die Acyl-, Alkyl- und Alkoxyreste 1 bis 10, vorzugsweise 1 bis 6 C-Atome aufweisen,
R⁸: H, Alkyl mit 1 bis 10, bevorzugt 1 bis 7 C-Atomen, Aryl mit 6 bis 18, bevorzugt 6 bis 12 C-Atomen,
n: 2 bis 16, bevorzugt 2 bis 10,
a: 1, 2 oder 3,
b: 0, 1 oder 2, mit der Maßgabe, daß a + b = 3, und
c: 0 oder 1,
- A2.: 0 bis 40 Mol-%, bezogen auf das Kondensat aus A1, A2 und A3, organischen Sol-Gel-kondensierbaren Monomeren, und
- A3.: 0 bis 40 Mol-%, bezogen auf das Kondensat aus A1, A2 und A3, einer oder mehrerer Sol-Gel-kondensierbarer Verbindungen des Siliciums und gegebenenfalls anderer Elemente aus der Gruppe B, Al, P, Sn, Pb, der Übergangsmetalle, der Lanthaniden und der Aktiniden,
wobei die Summe der Mengen aus A2 und A3 40 Mol-% nicht überschreiten darf und die Mengen von A1, A2 und A3 sich zu 100 Mol-% ergänzen müssen.

In einer bevorzugten Ausführungsform sind die Polysiloxane durch Sol-Gel-Kondensation von 100 Mol-% Komponente A1 erhältlich.

Die Sol-Gel-Kondensation erfolgt, gegebenenfalls in Anwesenheit von Katalysatoren und/oder Lösungsmitteln, durch die Einwirkung von Wasser bzw. Feuchtigkeit in Mengen von 1 bis 100, bevorzugt 5 bis 100 Molprozent, bezogen auf die monomeren Sol-Gel-kondensierbaren cyclischen Siloxane nach Formel (1).

Ein weiterer Gegenstand der Erfindung sind harzartige Zusammensetzungen, die gegebenenfalls in Anwesenheit von Initiatoren photochemisch, thermisch oder chemisch härtbar sind, auf der Basis von polymerisierbaren Polysiloxanen.

Die entstehenden Harze sind die bereits eingangs erwähnten Co- und Terpolymere der allgemeinen Formel (1a):

(A1)ₐ₁(A2)ₐ₂(A3)ₐ₃ (1a)

worin bedeuten:
a1 = 60 bis 100 Mol-%,
a2 = 0 bis 40 Mol-%,
a3 = 0 bis 40 Mol-%,
mit der Maßgabe, daß die Summe aus a1, a2 und a3 40 Mol-% nicht überschreiten darf.

Eine hierfür gegebene Voraussetzung für das Vorliegen von Co- bzw. Terpolymeren ist, daß die Komponenten A1, A2 bzw. A3 kovalent miteinander verbunden sind, was erfindungsgemäß durch zumindest teilweise Cokondensation der Hydrolysate bzw. Vorkondensate erreicht wird.

Ein anderer Gegenstand der Erfindung sind ferner Harze, die durch partielle oder vollständige Hydrolyse der Gruppen X von Vertretern der allgemeinen Formel (1) und anschließender partieller oder vollständiger Kondensation unter fakultativer partieller oder vollständiger Absättigung der verbliebenen Si-OH-Gruppen mit R⁹R¹⁰R¹¹Si-Gruppen entstehen, wobei R⁹, R¹⁰ und R¹¹ gleiche oder verschiedene Alk(en)ylgruppen mit 1 bis 10, bevorzugt 1 bis 6 C-Atomen bedeuten.

Ebenso sind Cokondensate der partiell oder vollständig hydrolysierten Vertreter der allgemeinen Formel (1) mit Vertretern der Formelklasse A3, beispielsweise Si-, Tioder Zr-Alkoxide und/oder substituierte Monoalkyltrialkoxysilane, Gegenstand der Erfindung. Spezielle Beispiele hierfür folgen später.

Gegenstand der Erfindung sind auch Polysiloxane, erhältlich durch Sol-Gel-Kondensation von
- A1.: 60 bis 100 Mol-%, bezogen auf das Kondensat aus A1 und A2, Monomeren oder Präkondensaten der Sol-Gel-kondensierbaren cyclischen Siloxane nach Formel (1) und
- A2.: 0 bis 40 Mol-%, bezogen auf das Kondensat aus A1 und A2, organischen Sol-Gel-kondensierbaren Monomeren,
wobei die Vertreter der Komponente A2 der Formel (2) folgen:

{YₑR_{f}Si[R'(B)_{g}]_{(4-e-f)}}ₓC (2)

in der die Reste und Indices folgende Bedeutung haben:
- Y:: Wasserstoff, Halogen, Hydroxy, Alkoxy, Acyloxy, Alkylcarbonyl, Alkoxycarbonyl oder -NR"₂;
- R:: Alkyl, Alkenyl, Aryl, Alkylaryl oder Arylalkyl;
- R':: Alkylen, Arylen oder Alkylenarylen:
- R":: Wasserstoff, Alkyl oder Aryl;
- B:: O, S, PR", POR", NHC(O)O oder NHC(O)NR";
- C:: geradkettiger oder verzweigter oder cyclischer oder polycyclischer organischer Rest, der mindestens eine C=C-Doppelbindung aufweist, aus 3 bis 70, bevorzugt 3 bis 50 Kohlenstoffatomen besteht und 0 bis 20, bevorzugt 0 bis 10 Heteroatome aus der Gruppe O, N, S aufweist; bevorzugt sind Acryloyl, Methacryloyl, Acryloxy-eth-2-yl, Methacryloxy-eth-2-yl, 5-Acryloyl-3-oxa-hept-1-yl, 6-Methacryloyl-3-oxa-hept-1-yl, Pentaerythrit-triacrylat-prop3-ylether, Pentaerythrit-trimethacrylat-prop3-ylether, Di-Penaterythrit-pentaacrylat-prop-3-ylether, Di-Penaterythrit-pentamethacrylat-prop-3-ylether, Trimethylolethandiacrylat-prop-3-ylether, Trimethylolethan-dimethacrylat-prop-3-ylether, 1,2-Propandiol-acrylat-prop-3-ylether, 1,2-Propandiol-methacrylat-prop-3-ylether, 1,3-Propandiol-acrylat-prop-3-ylether, 1,3-Propandiol-methacrylat-prop-3-ylether, 1,3-Butandiol-acrylat-prop-3-ylether, 1,3-Butandiol-methacrylat-prop-3-ylether, 1,4-Butendiol-acrylat-prop-3-ylether, 1,4-Butendiol-methacrylatprop-3-ylether, 1,4-Butindiol-acrylat-prop-3-ylether, 1,4-Butindiol-methacrylatprop-3-ylether, 1,5-Pentandiol-acrylat-prop-3-ylether, 1,5-Pentandiolmethacrylat-prop-3-ylether, 1,6-Hexandiol-acrylat-prop-3-ylether, 1,6-Hexandiol-methacrylat-prop-3-ylether, 1,8-Octandiol-acrylat-prop-3-ylether, 1,8-Octandiol-methacrylat-prop-3-ylether, 1,9-Nonandiol-acrylat-prop-3-ylether, 1,9-Nonandiol-methacrylat-prop-3-ylether, 1,10-Decandiol-acrylatprop-3-ylether, 1,10-Decandiol-methacrylat-prop-3-ylether, 1,12-Dodecandiolacrylat-prop-3-ylether, 1,12-Dodecandiol-methacrylat-prop-3-ylether, Glycerindiacrylat-prop-3-ylether, Glycerin-dimethacrylat-prop-3-ylether, 1,2,4-Butantriol-diacrylat-prop-3-ylether, 1,2,4-Butantriol-dimethacrylat-prop-3-ylether, 1,2,6-Hexantriol-diacrylat-prop-3-ylether, 1,2,6-Hexantrioldimethacrylat-prop-3-ylether, Diglycerin-triacrylat-prop-3-ylether, Diglycerintrimethacrylat-prop-3-ylether, Erythrit-triacrylat-prop-3-ylether, Erythrittrimethacrylat-prop-3-ylether, Mannit-pentaacrylat-prop-3-ylether, Mannitpentamethacrylat-prop-3-ylether, Sorbit-pentaacrylat-prop-3-ylether, Sorbitpentamethacrylat-prop-3-ylether, Inosit-pentaacrylat-prop-3-ylether, Inositpentamethacrylat-prop-3-ylether, 2,4,-Diacryloyl-3,5-triazin-6-(prop-3-yl), 2,4,-Dimethacryloyl-3,5-triazin-6-(prop-3-yl), (4-Acryloxyphenyl)-(4-(prop-3-yl)phenyl)-sulfon, (4-Methacryloxyphenyl)-(4-(prop-3-yl)phenyl)-sulfon, (4-Acryloxyphenyl)-(4-(prop-3-yl)phenyl)-keton, (4-Methacryloxyphenyl)-(4-(prop-3-yl) phenyl)-keton, (4-Acryloxyphenyl)-(4-(prop-3-yl)phenyl)-methan, (4-Methacryloxyphenyl)-(4-(prop-3-yl)phenyl)-methan, 1(4-Acryloxyphenyl)-1-(4-(prop-3-yl)phenyl)-ethan, 1(4-Methacryloxyphenyl)-1-(4-(prop-3-yl)phenyl)-ethan, 2(4-Acryloxyphenyl)-2(4-(prop-3-yl)phenyl)-propan, 2(4-Methacryloxy-phenyl)-2(4-(prop-3-yl)phenyl)-propan, 2(4-Acryloxyphenyl)-2(4-(prop-3-yl)phenyl)-perfluorpropan, 2(4-Methacryloxyphenyl)-2(4-(prop-3-yl)phenyl)-perfluor-propan, 2(4-Acryloxy-3,5-dibromphenyl)-2(4-(prop-3-yl)-3,5-dibrom-phenyl)-propan, 2(4-Methacryloxy-3,5-dibromphenyl)-2(4-(prop-3-yl)-3,5-dibrom-phenyl)-propan, 3(4-Acryloxyphenyl)-3(4-(prop-3-yl)phenyl)-pentan, 3(4-Methacryloxyphenyl)-3(4-(prop-3-yl)phenyl)-pentan, 4(4-Acryloxyphenyl)-4(4-(prop-3-yl) phenyl)-heptan, 4(4-Methacryloxyphenyl)-4(4-(prop-3-yl)phenyl)-heptan, 1(4-Acryloxyphenyl)-1(4-(prop-3-yl)phenyl)-cyclopentan, 1(4-Methacryloxyphenyl)-1(4-(prop-3-yl)phenyl)-cyclopentan, 1(4-Acryloxyphenyl)-1(4-(prop-3-yl)phenyl)-cyclohexan, 1(4-Methacryloxyphenyl)-1(4-(prop-3-yl)phenyl)-cyclohexan, 1(4-Acryloxyphenyl)-1(4-(prop-3-yl)phenyl)-3,3,5-trimethylcyclohexan, 1(4-Methacryloxyphenyl)-1(4-(prop-3-yl)phenyl)-3,3,5-trimethylcyclohexan, 1,1-Bis(4-acryloxyphenyl)-1(4-(prop-3-yl)phenyl)-ethan, 1,1-Bis(4-methacryloxyphenyl)-1(4-(prop-3-yl)phenyl)-ethan, Acryloxy-(prop-3-yl)-tricyclo[5.2.1.0^{2.6}]-decan, Methacryloxy-(prop-3-yl)-tricyclo[5.2.1.0^{2.6}]decan;
- e:: 1, 2 oder 3;
- f:: 0, 1 oder 2;
- g:: 0 oder 1;
- x:: eine ganze Zahl, deren Maximalwert der Anzahl von Doppelbindungen in der Verbindung C minus 1 entspricht oder gleich der Anzahl von Doppelbindungen in der Verbindung C ist, wenn g = 1 und B für NHC(O)O oder NHC(O)NR" steht.

Desweiteren ist die Verwendung der Harze und/oder der nicht-kondensierten Verbindungen, insbesondere in dentalen Massen, Gegenstand der Erfindung.

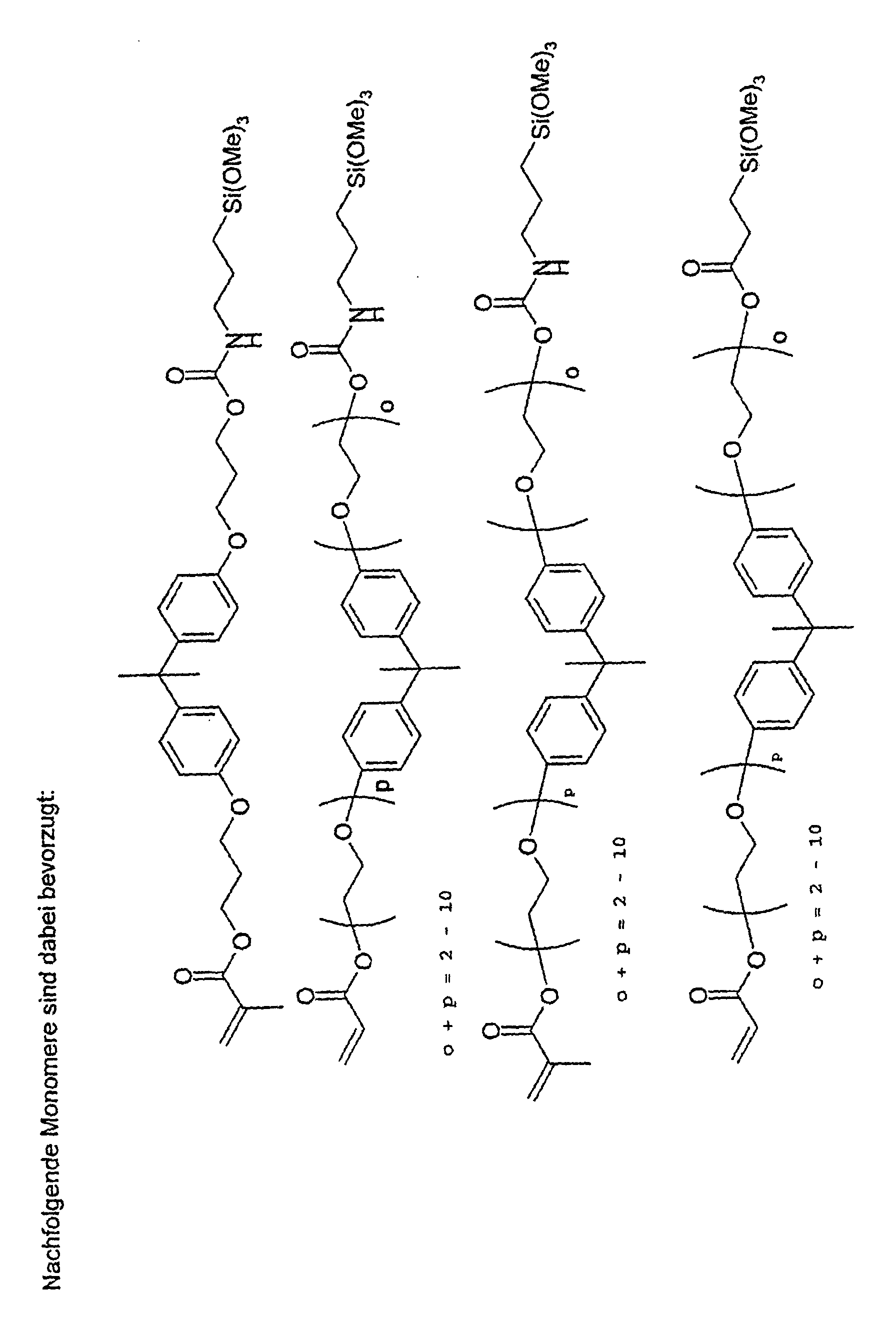

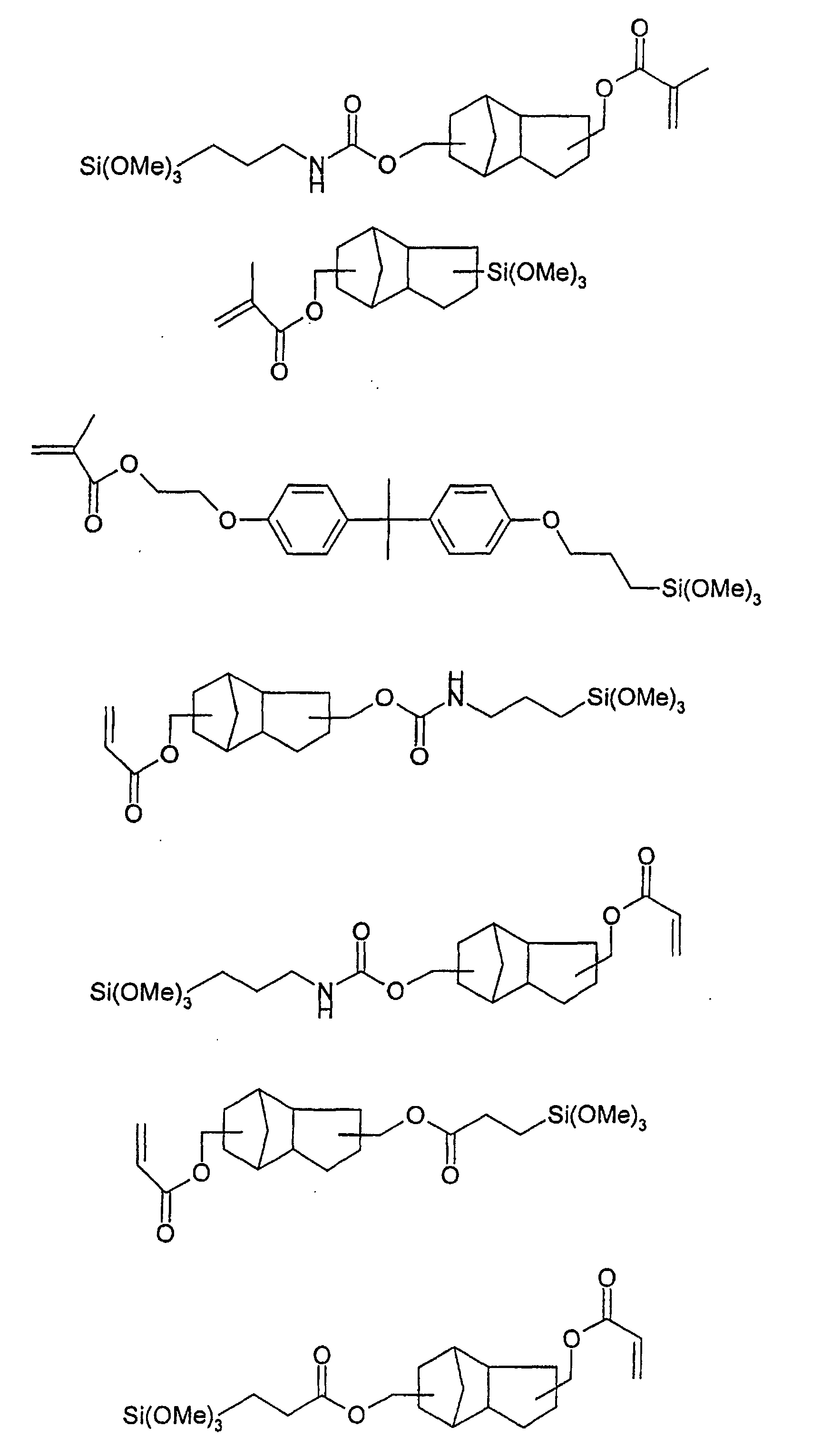

Zur Herstellung der erfindungsgemäßen Sol-Gel-kondensierbaren Monomere wird allgemein von Cyclosiloxanen der Formel (3): 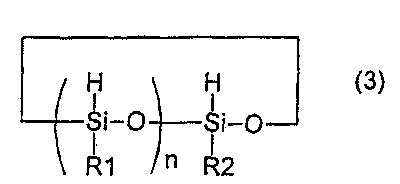 mit R¹ und R² bedeutungsgleich wie in Formel (1),
ausgegangen, die unter Katalyse mit Verbindungen der Formel (4):

R¹²-(AR⁶)_{c}-SiXₐR⁷ _{b} (4)

mit R¹² gleich Alkenyl oder Alkinyl linear oder verzweigt mit 1-10, bevorzugt 2-6 C-Atomen, oder Cycloalkenyl bzw. Cycloalkinyl mit 3-12, bevorzugt 5-8 C-Atomen mit bis zu 3 Heteroatomen O, N, S und der Maßgabe, daß die anderen Reste die gleiche Bedeutung haben wie in Formel (1) unterstöchiometrisch umgesetzt werden.

Durch Aufreinigung wird das Monoadukt der Formel (5) erhalten: 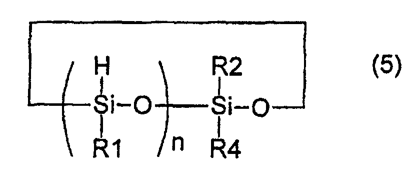 mit der Maßgabe, daß die Reste R¹, R² und R⁴ die gleiche Bedeutung wie in Formel (1) haben.

Die Darstellung von Vertretern der allgemeinen Formel (5) gelingt durch katalytische Umsetzung mit Verbindungen der Formel (4), die mindestens eine C-C-Doppelbindung enthalten. Die Verbindungen nach Formel (3) werden hierbei in geeigneten Lösungsmitteln, beispielsweise Toluol, vorgelegt und mit der stöchiometrischen Menge des Vertreters der Formel (4) versetzt. Besonders bevorzugte Vertreter von (3) enthalten drei bis fünf Siloxaneinheiten, wie 1,3,5,7-Tetramethylcyclotetrasiloxan, 1,3,5,7-Tetraethylcyclotetrasiloxan, 1,3,5,7-Tetraphenylcyclotetrasiloxan, 1,3,5,7,9-Pentamethylcyclopentasiloxan, 1,3,5,7,9-Pentaethylcyclopentasiloxan und 1,3,5,7,9-Pentaphenylcyclopentasiloxan. Besonders geeignete Vertreter von Formel (4) sind Vinyl- bzw. Allyltrialkylsilane, wie Vinyltrimethoxysilan (Fa. Wacker), Allyltrimethoxysilan, Vinyltriethoxysilan und Allyltriethoxysilan.

Die Herstellung von Vertretern der allgemeinen Formel (1) gelingt schließlich durch katalytische Umsetzung von Verbindungen nach Formel (5) mit Verbindungen der Formel (6)

R¹²-Z (6)

wobei R¹² die gleiche Bedeutung wie in Formel (4) und Z die gleiche Bedeutung wie in Formel (1) hat.

Geeignete Katalysatoren sind homogene und heterogene Edelmetall-Katalysatoren, besonders homogene und heterogene Platin-Katalysatoren, ganz besonders Speier-Katalysator, Karstedt-Katalysator, Platin auf Aktivkohle, Wilkinson-Katalysator, Deloxan-Katalysator (Degussa), polymergebundener Wilkinson-Katalysator, Platin auf Aluminiumoxid und Platin auf Bariumsulfat.

Explizit sind folgende Substanzen nach der allgemeinen Formel (1) Gegenstand der Erfindung, wobei jeweils auch die ethylsubstituierte Variante (-Si(OEt)₃) mit als Erfindungsbestandteil gelten sollen:

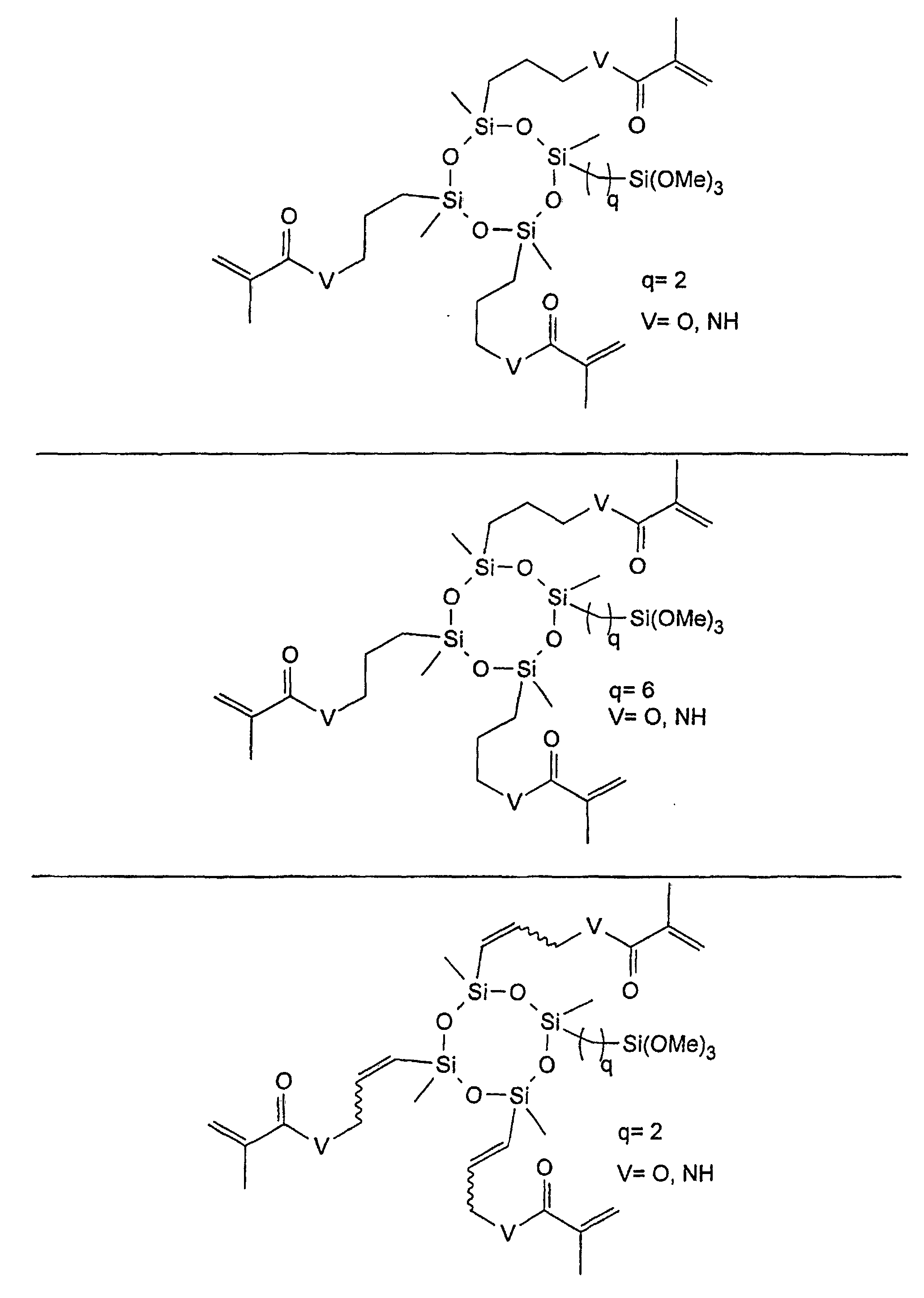

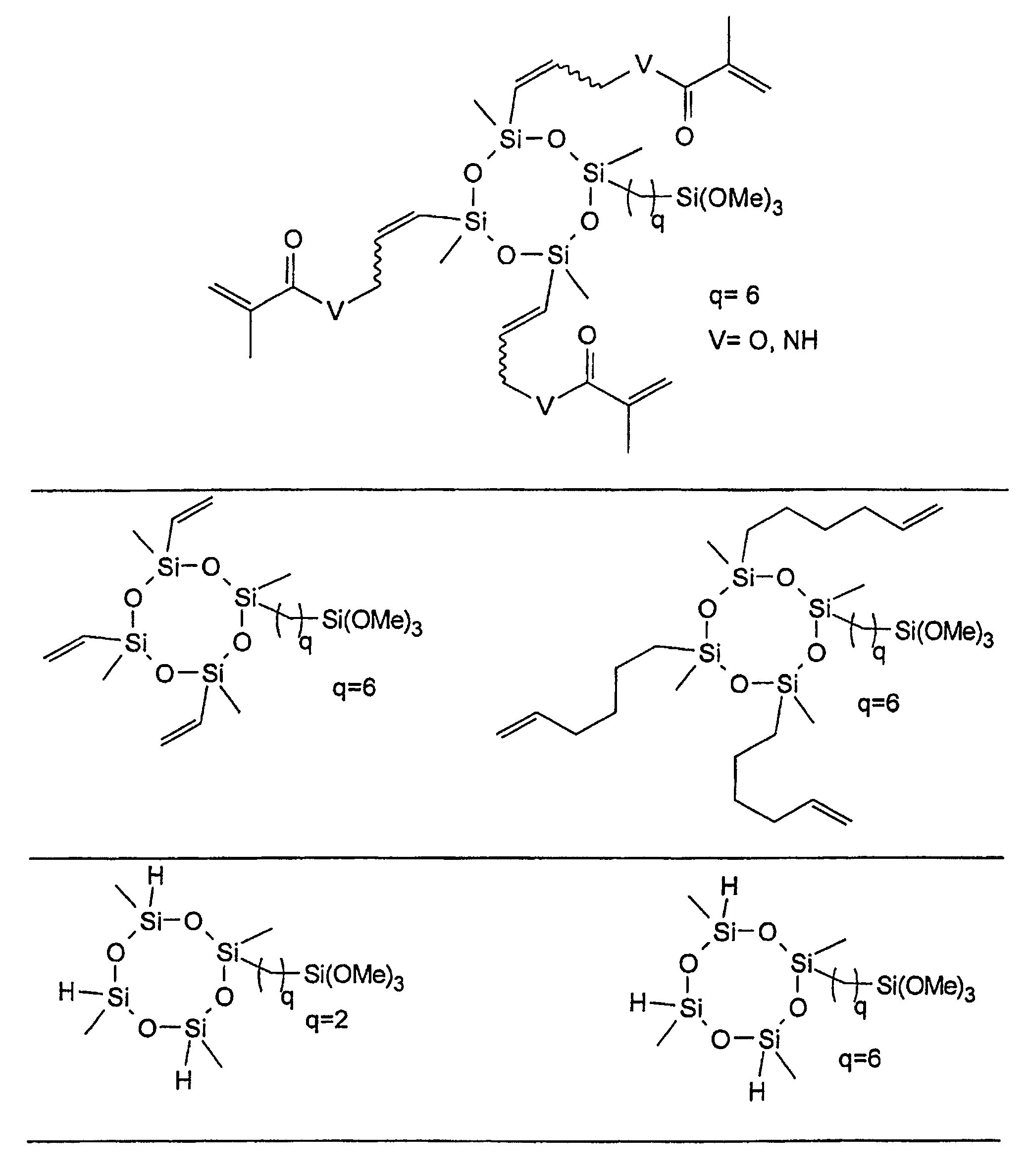

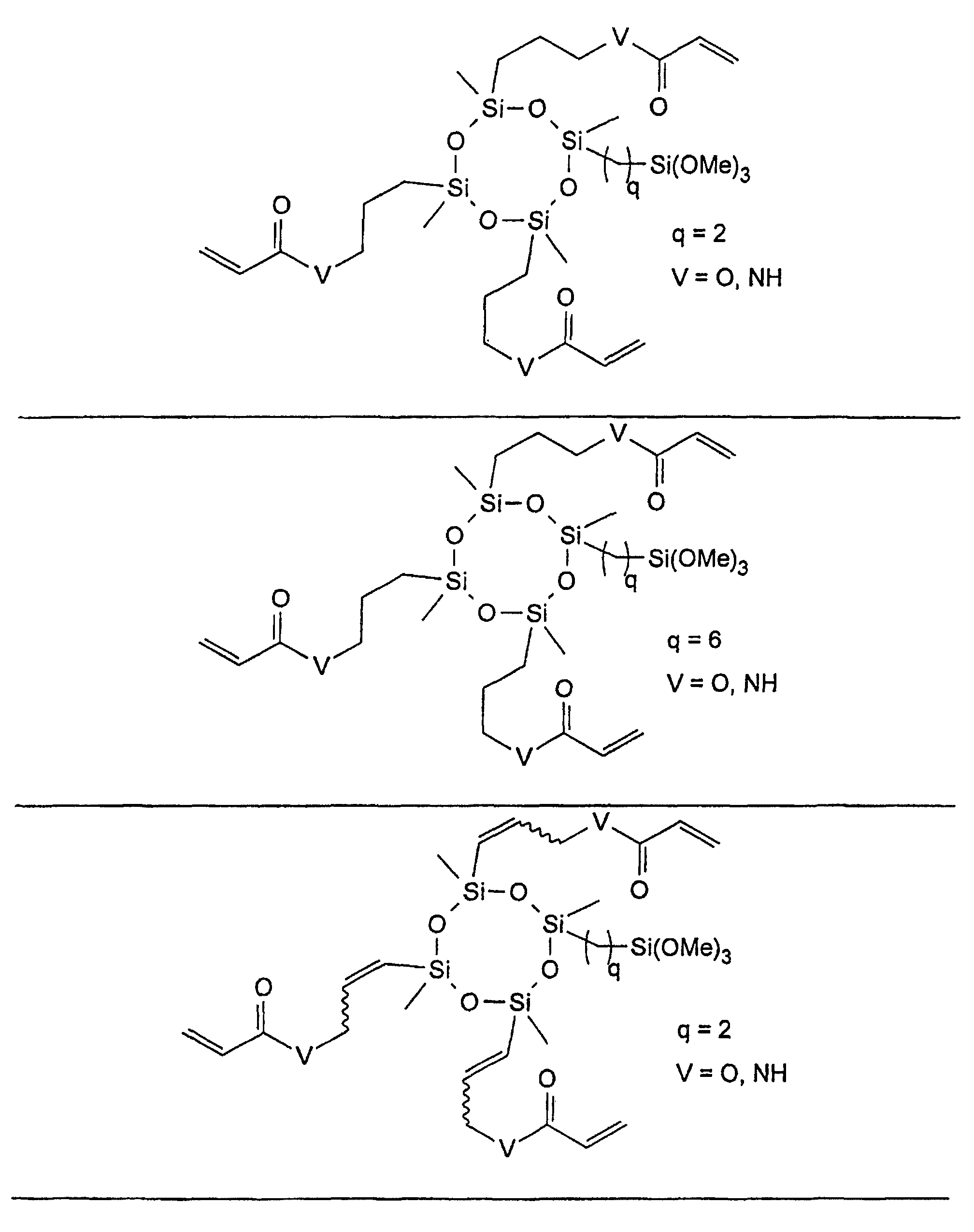

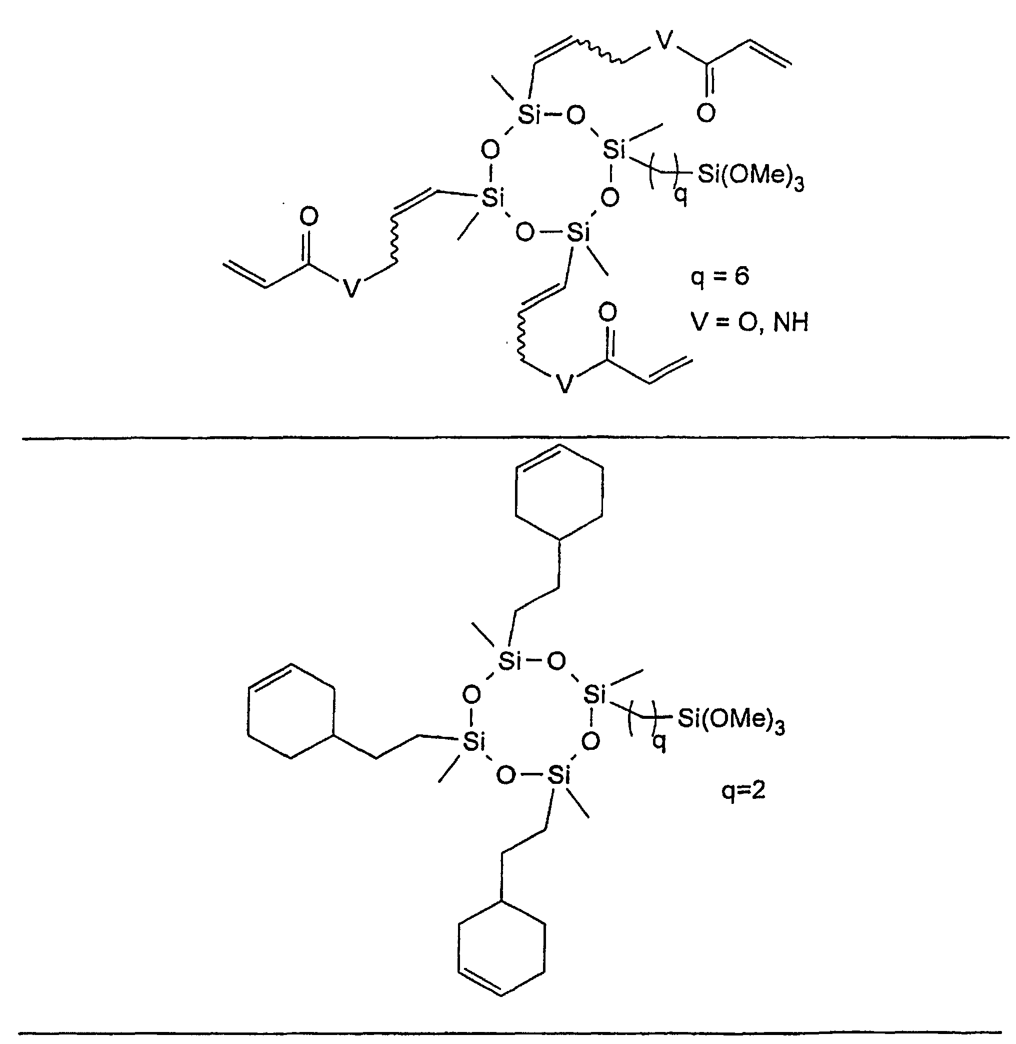

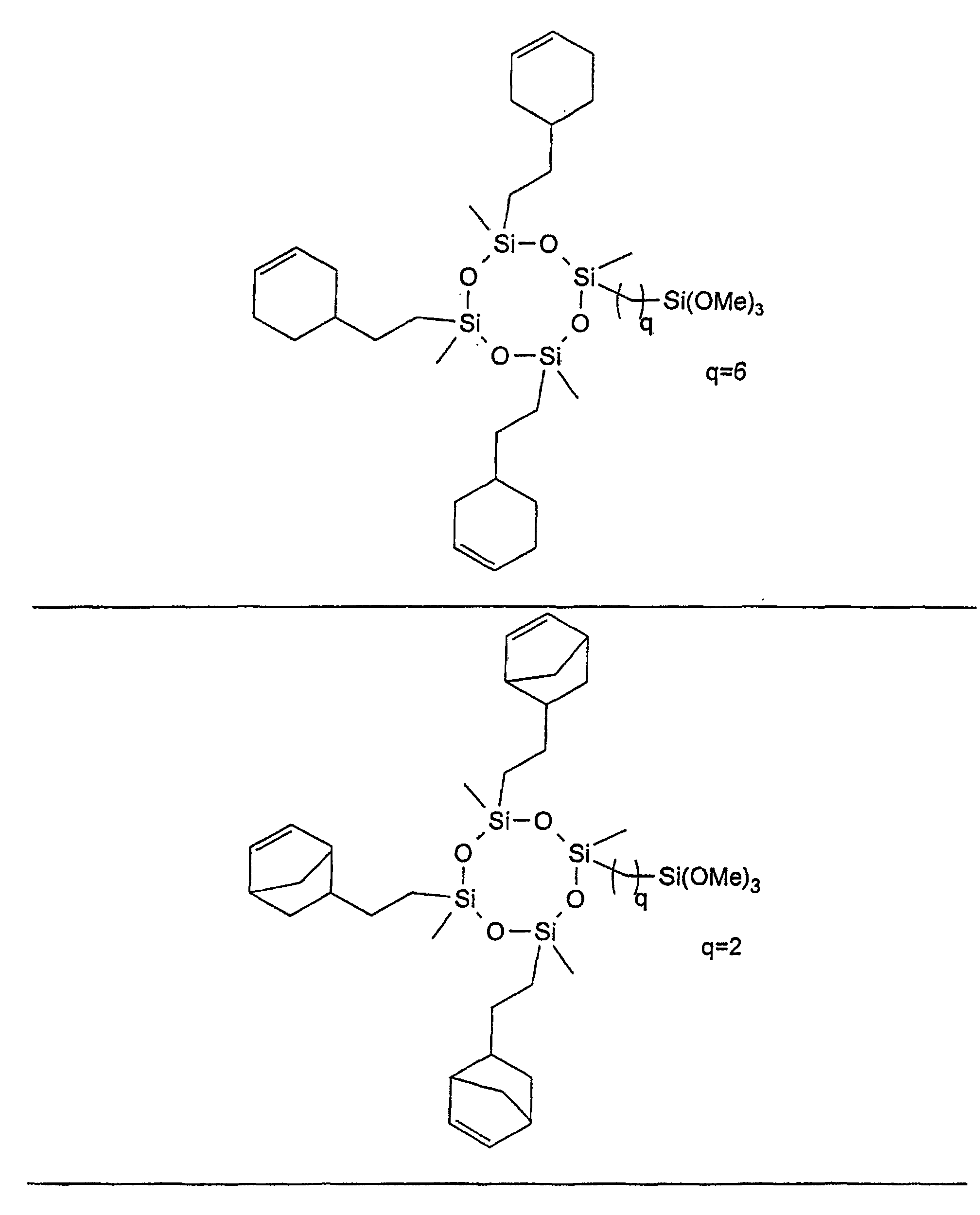

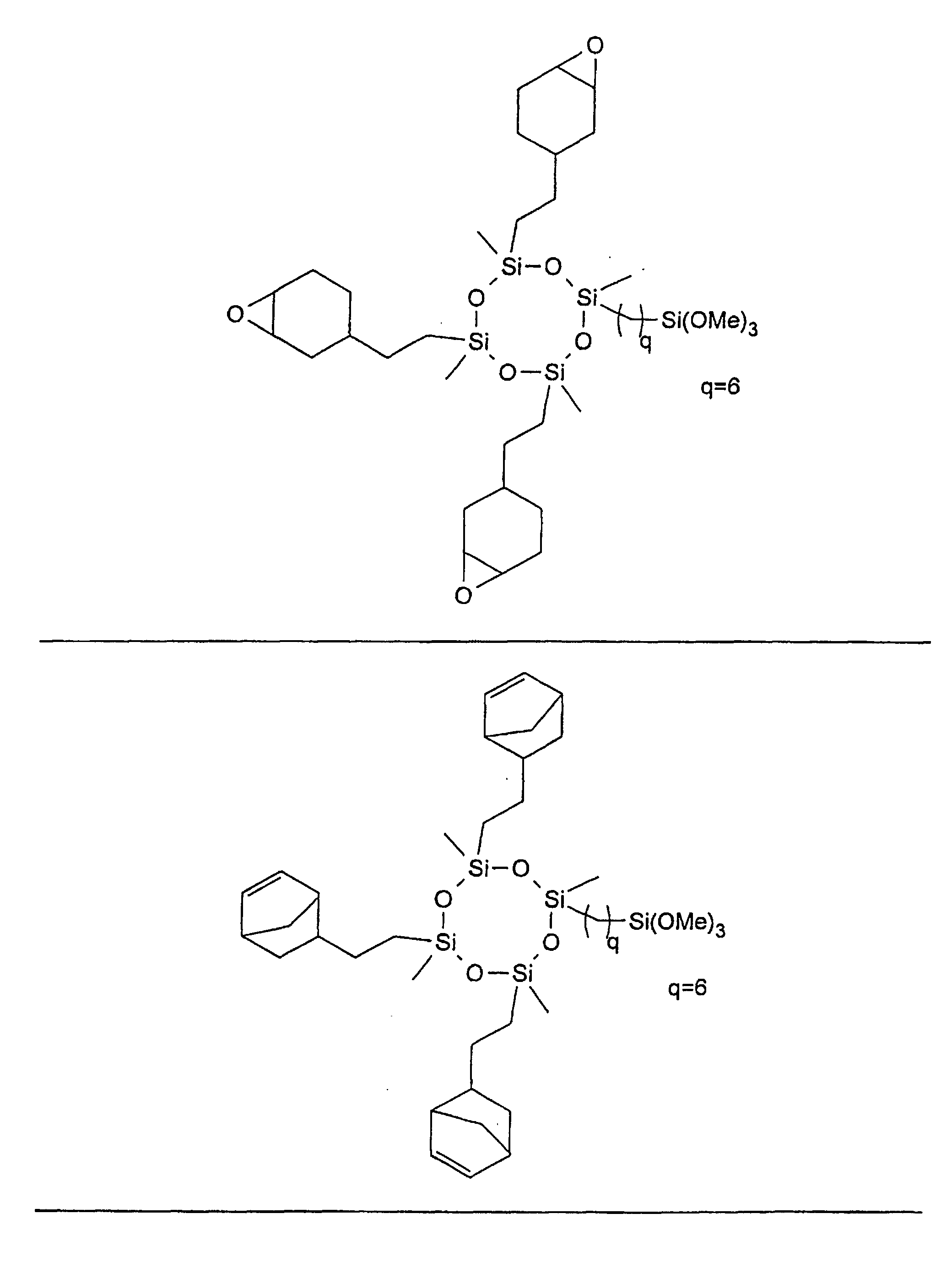

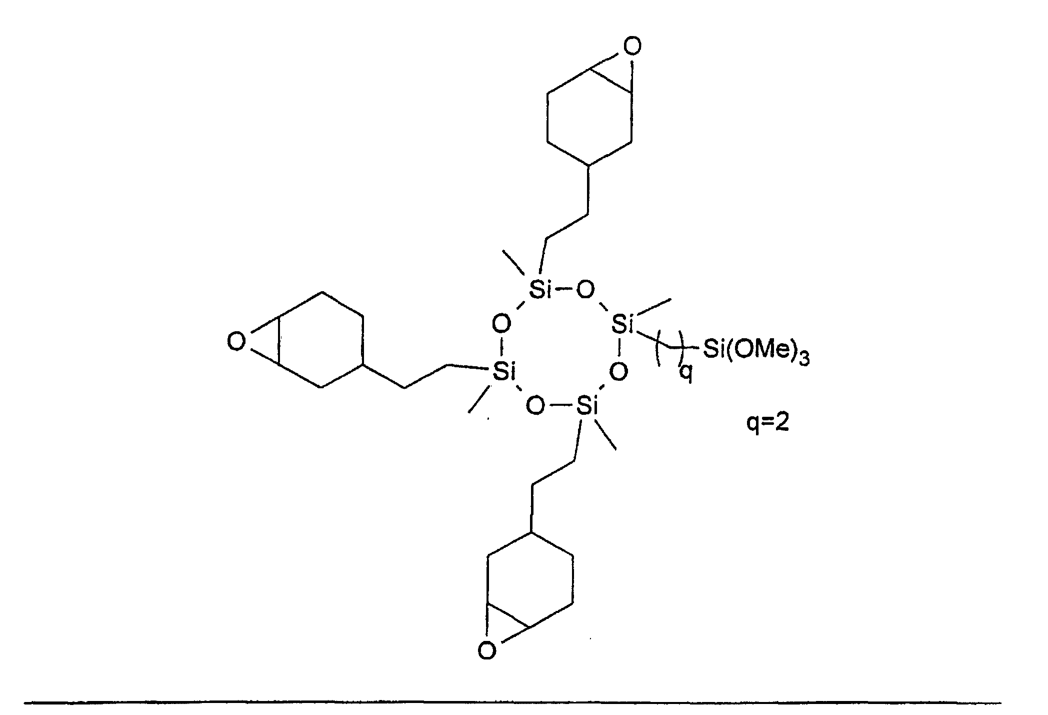

Die vorstehenden Formeln geben den idealisierten Zustand ausschließlich β-hydrosilylierter Produkte wieder. Tatsächlich beinhalten die Verbindungen auch einen Anteil an α-Addukten, wie er bei jeder Hydrosilylierung literaturbekannt entsteht.

Zur Herstellung von Sol-Gel-kondensierten Harzen werden Vertreter der Formel (1) prinzipiell mit Wasser hydrolysiert. Bei Cokondensaten werden die einzelnen Monomere getrennt hydrolysiert, vereinigt und gemeinsam kondenisert.

Kommen praktisch ausschließlich Siliciumverbindungen zum Einsatz, kann die hydrolytische Kondensation in den meisten Fällen dadurch erfolgen, daß zu den hydrolysierenden Siliciumverbindungen, die entweder als solche oder gelöst in einem geeigneten Lösungsmittel vorliegen, die stöchiometrisch erforderliche Menge Wasser bzw. gegebenenfalls ein Überschuß an Wasser bei Raumtemperatur oder unter leichter Kühlung direkt - vorzugsweise unter Rühren und in Anwesenheit eines geeigneten Hydrolyse- und Kondensationskatalysators - zugegeben wird. Die so resultierende Mischung wird einige Zeit - bis zu mehreren Stunden - gerührt.

Bei Anwesenheit von reaktiveren Verbindungen (Ti, Al, Zr) empfiehlt sich in der Regel eine stufenweise Zugabe des Wassers.

Unabhängig von der Reaktvität der verwendeten Verbindungen erfolgt die Hydrolyse in der Regel bei Temperaturen zwischen -20 und 130°C, vorzugsweise zwischen 0 und 30°C bzw. beim Siedepunkt des gegebenenfalls verwendeten Lösungsmittels.

Aufgrund der unterschiedlichen Reaktivitäten der Verbindungen kann es zweckmäßig sein, das Wasser vorzulegen und die gelösten Verbindungen zuzugeben, die gelösten Verbindungen vorzulegen und das Wasser zuzugeben, das Wasser in Form von wasserhaltigen organischen oder anorganischen Lösungsmitteln zuzugeben oder vorzulegen oder auch das Wasser in Form von feuchtigkeitsbeladenen Adsorbentien, wie Molekularsieben, in das Reaktionsgemisch einzutragen. Die Wasserzugabe kann auch über eine Reaktion erfolgen, bei der Wasser gebildet wird, beispielsweise bei der Esterbildung aus Säure und Alkohol.

Um Ausfällungen während der Hydrolyse entgegenzuwirken, hat es sich als zweckmäßig erwiesen, das Wasser in mehreren Stufen oder auch tropfenweise zuzugeben.

Wird ein Lösungsmittel verwendet, kommen neben den niederen aliphatischen Alkoholen (z.B. Ethanol, Isopropanol) auch Ketone, beispielsweise niedere Dialkylketone, wie Aceton und Methylisobutylketon, Ether, beispielsweise niedere Dialkylether, wie Diethylether und Dibutylether, THF, Amide, Ester, beispielsweise Essigsäureethylester, Dimethylformamid, und deren Gemische in Frage.

Sollen Hydrolyse- und Kondensationskatalysatoren eingesetzt werden, sind Protonen abspaltende Verbindungen bevorzugt. Beispiele hierfür sind organische, und anorganische Säuren, wie Salzsäure, Ameisensäure und Essigsäure. Im Falle einer basischen Katalyse sind beispielsweise NH₃, NaOH oder KOH geeignet. Auch ist eine Katalyse mit Fluoridionen möglich, beispielsweise unter Einsatz von KF, HF oder NH₄F.

Unter den von Siloxanen der allgemeinen Formel (1) verschiedenen, hydrolytisch kondensierbaren Verbindungen, die gegebenenfalls eingesetzt werden können, sind gemäß der Komponente A2 solche der Formel (2) und gemäß der Komponente A3 solche der nachfolgenden allgemeinen Formel (7) besonders bevorzugt:

X_{a'}SiR¹³ _{b'} (7)

Hierin ist X wie vorher definiert. a' stellt eine ganze Zahl von 1 bis 4, insbesondere 2 bis 4 und b' 0, 1, 2 oder 3, vorzugsweise 0, 1 oder 2 dar. R¹³ stellt Alkyl-, Alkenyl-, Aryl-, Alkylaryl- oder Arylalkyl-Reste dar, wie sie oben definiert sind.

Besonders bevorzugte Verbindungen der allgemeinen Formel (7) sind solche, in denen die Reste X, die gleich oder verschieden sein können, ausgewählt sind aus Halogen (F, Cl, Br und I, insbesondere Cl und Br), Alkoxy (insbesondere C₁-C₄-Alkoxy, wie z.B. Methoxy, Ethoxy, n-Propoxy, i-Propoxy und Butoxy), Aryloxy (insbesondere C₈-C₁₀-Aryloxy, z.B. Phenoxy), Acyloxy (insbesondere C₁-C₄-Acyloxy, wie z.B. Acetoxy und Propionyloxy) und Hydroxy, die Reste R, die gleich oder verschieden sein können, ausgewählt sind aus Alkyl (insbesondere C₁-C₄-Alkyl, wie z.B. Methyl, Ethyl, Propyl und Butyl), Alkenyl (insbesondere C₂-Alkenyl, wie z.B. Vinyl, 1-Propenyl, 2-Propenyl und Butenyl), Alkinyl (insbesondere C₂-C₄-Alkinyl, wie Acetylenyl und Propargyl) und Aryl (insbesondere C₆-C₁₀-Aryl, wie z.B. Phenyl und Naphthyl), wobei die soeben genannten Gruppen (mit Ausnahme von Halogen und Hydroxy) gegebenenfalls einen oder mehrere unter den Reaktionsbedingungen inerte Substituenten, wie z.B. Halogen und Alkoxy, aufweisen können. Die obigen Alkylreste schließen auch die entsprechenden cyclischen und Aryl-substituierten Reste, wie z.B. Cyclohexyl und Benzyl ein, während die Alkenyl- und Alkinylgruppen ebenfalls cyclisch sein können und die genannten Arylgruppen auch Alkarylgruppen (wie Tolyl und Xylyl) mit einschließen sollen.

Neben den oben genannten besonders bevorzugten Resten X können als weitere, ebenfalls geeignete Gruppen genannt werden: Wasserstoff und Alkoxyreste mit 5 bis 20, insbesondere 5 bis 10 Kohlenstoffatomen und Halogen- und Alkoxy-substituierte Alkoxygruppen (wie z.B. β-Methoxyethoxy). Weitere geeignete Gruppen R sind geradkettige, verzweigte oder cyclische Alkyl-, Alkenyl- und Alkinylreste mit 5 bis 20, insbesondere 5 bis 10 Kohlenstoffatomen, wie z.B. n-Pentyl, n-Hexyl, Dodecyl und Octadecyl, sowie Gruppen, die über Epoxy-, Mercapto- oder Aminoreste verfügen.

Sowohl für die Verbindungen der aligemeinen Formel (1) als auch diejenigen der allgemeinen Formeln (2) und (7) gilt: Da die Reste X im Endprodukt nicht vorhanden sind, sondern durch Hydrolyse verlorengehen, wobei das Hydrolyseprodukt in der Regel früher oder später auch in irgendeiner geeigneten Weise entfernt werden muß, sind Reste X besonders bevorzugt, die keinen Substituenten tragen und zu Hydrolyseprodukten mit niedrigem Molekulargewicht, wie z.B. niederen Alkoholen, wie Methanol, Ethanol, Propanol, n-, i-, sek.- und tert.-Butanol, führen.

Die Verbindungen der Formeln (1), (2) und (7) können ganz oder teilweise in Form von Vorkondensaten eingesetzt werden, d.h. Verbindungen, die durch teilweise Hydrolyse der Verbindungen der Formeln (1), (2) und (7), entweder allein oder im Gemisch mit anderen hydrolysierbaren Verbindungen, wie sie weiter unten näher beschrieben werden, entstanden sind. Derartige, im Reaktionsmedium vorzugsweise lösliche, Oligomere können geradkettige oder cyclische, niedermolekulare Teilkondensate (Polyorganosiloxane) mit einem Kondensationsgrad von z.B. etwa 2 bis 100 (z.B. 2 bis 20), insbesondere etwa 6 bis 10, sein.

Konkrete Beispiele für (zum Großteil im Handel erhältliche) Verbindungen der allgemeinen Formel (7), die erfindungsgemäß bevorzugt eingesetzt werden, sind Verbindungen der folgenden Formeln:
Si(OCH₃)₄, Si(OC₂H₅)₄, Si(O-n- oder i-C₃H₇)₄
Si(OC₄H₉)₄, SiCl₄, HSiCl₅, Si(OOCCH₃)₄
CH₃-SiCl₃, CH₃-Si(OC₂H₅)₃, C₂H₅-SiCl₃, C₂H₅-Si(OC₂H₅)₃,
C₃H₇-Si(OCH₃)₃, C₆H₅-Si(OCH₃)₃, C₆H₅-Si(OC₂H₅)₃,
(CH₃O)₃Si-C₃H₆-Cl,
(CH₃)₂SiCl₂, (CH₃)₂Si(OCH₃)₂, (CH₃)₂Si(OC₂H₅)₂,
(CH₃)₂Si(OH)₂, (C₆H₅)₂SiCl₂, (C₆H₅)₂Si(OCH₃)₂,
(C₆H₅)₂Si(OC₂H₅)₂, (i-C₃H₇)₃SiOH,
CH₂=CH-Si(OOCCH₃)₃,
CH₂=CH-SiCl₃, CH₂=CH-Si(OCH₃)₃, CH₂=CH-Si(OC₂H₅)₃,
CH₂=CH-Si(OC₂H₄OCH₃)₃, CH₂=CH-CH₂-Si(OCH₃)₃,
CH₂=CH-CH₂-Si(OC₂H₅)₃,
CH₂=CH-CH₂-Si(OOCCH₃)₃,
CH₂=C(CH₃)-COO-C₃H₇-Si(OCH₃)₃,
CH₂=C(CH₃)-COO-C₃H₇-Si(OC₂H₅)₃,
(C₂H₅O)₃Si-C₆H₄-NH₂, CH₃(C₂H₅O)₂Si-(CH₂)₄-NH₂, (C₂H₅O)₃Si-C₃H₆-NH₂,
(CH₃)₂(C₂H₅O)Si-CH₂-NH₂, (C₂H₅O)₃Si-C₃H₆-CN, (CH₃O)₃Si-C₄H₈-SH,
(CH₃O)₃Si-C₆H₁₂-SH, (CH₃O)₃Si-C₃H₆-SH,
(C₂H₅O)₃Si-C₃H₆-SH,
(CH₃O)₃Si-C₃H₆-NH-C₂H₄-NH₂,
(CH₃O)₃Si-C₃H₆-NH-C₂H₄-NH-C₂H₄-NH₂,

Diese Silane lassen sich nach bekannten Methoden herstellen; vergleiche W. Noll, "Chemie und Technologie der Silicone", Verlag Chemie GmbH, Weinheim/Bergstraße (1968).

Das Verhältnis der Siliciumverbindungen mit vier, drei, zwei bzw. einem hydrolysierbaren Rest X (bzw. auch der von Siliciumverbindungen verschiedenen hydrolysierbaren Verbindungen) untereinander richtet sich vor allem nach den gewünschten Eigenschaften des resultierenden Polykondensats bzw. des daraus hergestellten Endprodukts.

Unter den gegebenenfalls zur Herstellung der Polykondensate verwendeten hydrolysierbaren Aluminiumverbindungen gemäß Komponente A3 sind diejenigen besonders bevorzugt, die die allgemeine Formel (8):

AlX'₃ (8)

aufweisen, in der die Reste X', die gleich oder verschieden sein können, ausgewählt sind aus Halogen, Alkoxy, Alkoxycarbonyl und Hydroxy. Hinsichtlich der näheren (bevorzugten) Definition dieser Reste kann auf die Ausführungen im Zusammenhang mit erfindungsgemäß geeigneten hydrolysierbaren Siliciumverbindungen verwiesen werden. Die soeben genannten Gruppen können auch ganz oder teilweise durch Chelatliganden (z.B. Acetylaceton oder Acetessigsäureester, Essigsäure) ersetzt sein.

Besonders bevorzugte Aluminiumverbindungen sind die Aluminiumalkoxide und - halogenide. In diesem Zusammenhang können als konkrete Beispiele genannt werden:
Al(OCH₃)₃, Al(OC₂H₅)₃, Al(O-n-C₃H₇)₃, Al(O-i-C₃H₇)₃,
Al(OC₄H₉)₃, Al(O-i-C₄H₉)₃, Al(O-sek-C₄H₉)₃,
AlCl₃, AlCl(OH)₂.

Bei Raumtemperatur flüssige Verbindungen, wie z.B. Aluminium-sek-butylat und Aluminium-isopropylat, werden besonders bevorzugt.

Geeignete hydrolysierbare Titan- und Zirkoniumverbindungen gemäß Komponente A3, die erfindungsgemäß eingesetzt werden können, sind solche der nachfolgenden allgemeinen Formel (9):

MX_{a'}R¹³_{b'} (9)

in der M Ti oder Zr bedeutet und X, R¹³, a' und b' wie im Falle der allgemeinen Formel (7) definiert sind. Dies gilt auch für die bevorzugten Bedeutungen von X und R. Besonders bevorzugt handelt es sich bei den Verbindungen der Formel (9) um solche, in denen a' gleich 4 ist.

Wie im Falle der obigen AI-Verbindungen können auch komplexierte Ti- und Zr-Verbindungen eingesetzt werden. Zusätzliche bevorzugte Komplexbildner sind hier Acrylsäure und Methacrylsäure.

Konkrete Beispiele für erfindungsgemäß einsetzbare Zirkonium- und Titanverbindungen sind die folgenden:
TiCl₄, Ti(OC₂H₅)₄, Ti(OC₃H₇)₄,
Ti(O-i-C₃H₇)₄, Ti(OC₄H₉)₄, Ti(2-ethylhexoxy)₄;
ZrCl₄, Zr(OC₂H₅)₄, Zr(OC₃H₇)₄, Zr(O-i-C₃H₇)₄,
Zr(OC₄H₉)₄, ZrOCl₂, Zr(2-ethylhexoxy)₄.

Weitere hydrolysierbare Verbindungen, die zur Herstellung der erfindungsgemäßen Polykondensate eingesetzt werden können, sind z.B. Bortrihalogenide und Borsäureester (wie z.B. BCl₃, B(OCH₃)₃ und B(OC₂H₅)₃), Zinntetrahalogenide und Zinntetraalkoxide (wie z.B. SnCl₄ und Sn(OCH₃)₄) und Vanadylverbindungen, wie z.B. VOCl₃ und VO(OCH₃)₃.

Gegenstand der Erfindung sind weiterhin Dentalmassen, die auf den erfindungsgemäßen Substanzen beruhen. Sie enthalten beispielsweise:
(A) 0,1 bis 40, bevorzugt 5 bis 15 Masseteile erfindungsgemäße cyclische Sol-Gel-kondensierbare Siloxane nach Formel (1) bzw. deren oben beschriebene Co-Kondensate,
(B) 0 bis 20, bevorzugt 5 bis 15 Masseteile Co-Monomere,
(C) 40 bis 90, bevorzugt 75 bis 88 Masseteile feinteilige anorganische und / oder organische Füllstoffe,
(D) 0,1 bis 5 Masseteile eines Initiatorsystems, das zur Bildung freier Radikale befähig ist,
(E) 0 bis 20 Masseteile Modifikatoren, wie Thixotropiemittel, Farbstoffe, Stabilisatoren,
wobei die Summe der Masseteile 100 beträgt.

Ist eine Aushärtung der erfindungsgemäßen Polykondensate durch Bestrahlung (UV oder IR-Strahlung) und/oder thermische Energie beabsichtigt, so kann ein geeigneter Initiator als Komponente (D) zugesetzt werden. Die erfindungsgemäßen Polykondensate können jedoch auch alleine über ein solches Initiatorsystem zur Aushärtung gebracht werden.

Als Photoinitiatoren können beispielsweise die im Handel erhältlichen eingesetzt werden. Beispiele hierfür sind Irgacure 184 (1-Hydroxycyclohexylphenylketon), Irgacure 500 (1-Hydroxycyclohexylphenylketon, Benzophenon) und andere von der Firma Giba-Geigy erhältliche Photoinitiatoren vom Irgacure-Typ; Darocur 1173, 1116, 1398, 1174 und 1020 (erhältlich von der Firma Merck), Benzophenon, 2-Chlorthioxanthon, 2-Methylthioxanthon, 2-lsopropylthioxanthon, Benzoin, 4,4'-Dimethoxybenzoin, Benzoinethylether, Benzoinisopropylether, Benzyldimethylketal, 1,1,1-Trichloracetophenon, Diethoxyacetophenon, Dibenzosuberon und Campherchinon. Der letztgenannte Initiator eignet sich besonders bei Bestrahlung mit Licht im sichtbaren Bereich.

Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, tert.-Butylpe-benzoat sowie Azobisisobutyronitril. Der Initiator kann in üblichen Mengen zugegeben werden. So kann z.B. einer Mischung, die 30 bis 50 Gewichtsprozent Polykondensat enthält, Initiator in einer Menge von z.B. 0,5 bis 5 Gewichtsprozent, insbesondere 1 bis 3 Gewichtsprozent, bezogen auf die Mischung, zugesetzt werden.

Die Aushärtung ist abhängig von der Art bzw. Anwesenheit eines Initiators, und kann thermisch oder durch Bestrahlen (z.B. mit einem UV-Strahler, einem Laser, einem Elektronenstrahl, einer Lichtquelle, die Strahlung im sichtbaren Bereich aussendet, usw.) in an sich bekannter Weise durchgeführt werden. Selbstverständlich sind auch Kombinationen von Aushärtungsmethoden möglich, z.B UV/IR oder UV/thermisch.

Als Füllstoffe gemäß Komponente (C) sind in der Regel anorganische, aber auch organische polymere Füllstoffe geeignet. Beispielhaft genannt seien Quarz, gemahlene Gläser, Kieselgele sowie pyrogene Kieselsäuren und Fällungskieselsäuren oder deren Granulate. Bevorzugt werden röntgenopake Füllstoffe, zumindest teilweise, mit eingesetzt. Diese können beispielsweise röntgenopake Gläser sein, also Gläser, welche beispielsweise Strontium, Barium oder Lanthan enthalten (z.B. nach US-A-3 971 754); ein Teil der Füllkörper kann auch aus einem röntgenopaken Zusatz, wie beispielsweise Yttriumtrifluorid, Strontiumhexafluorozirkonat oder Fluoriden der Selten-Erdmetalle (z.B. nach EP-0 238 025) bestehen. Zum besseren Einbau in die Polymermatrix ist es von Vorteil, anorganische Füllstoffe zu hydrophobieren. Übliche Hydrophobierungsmittel sind Silane, beispielsweise Trimethoxymethacryloyloxypropylsilan oder Trimethoxyglycidylsilan.

Die Füllkörper haben vorzugsweise eine mittlere Kornverteilung <20µm und insbesondere <5 µm sowie eine obere Korngrenze von 150, vorzugsweise 70 µm und insbesondere 25 µm. Besonders bevorzugt werden Gemische von 5 bis 25 Gew.-% Füllstoffe mit einer mittleren Korngröße von 0,02 - 0,06 µm und 65 bis 85 Gew.-% Füllkörper mit einer mittleren Korngröße von 1 bis 5 µm verwendet.

Geeignete Hilfs- und Zusatzstoffe nach Komponente (E) können beispielsweise üblicherweise auf dem Dentalgebiet eingesetzte Stabilisatoren, Pigmente oder Verdünnungsmittel sein.

Co-Monomere nach Komponente (B) sind mindestens einfach ethylenisch ungesättigt. Bevorzugt verwendete ethylenisch ungesättigte Co-Monomere sind Acrylate oder Methacrylate. Geeignet sind allgemein ein- und mehrfunktionelle (Meth)acrylatmonomere. Typische Vertreter dieser Verbindungsklasse (P 43 28 960.6) sind Alkyl(meth)acrylate, einschließlich der Cycloalkyl(meth)acrylate, Aralkyl(meth)acrylate und 2-Hydroxyalkyl(meth)acrylate, beispielsweise Hydroxypropylmethacrylat, Hydroxyethylmethacrylat, Isobornylacrylat, Isobornylmethacrylat, Butylglycolmethacrylat, Acetylglykolmethacrylat, Triethylenglycoldimethacrylat, Polyethylenglycoldimethacrylat, 2-Phenylethylmethacrylat, 2-Ethylhexylmethacrylat, Cyclohexylmethacrylat, Laurylmethacrylat und Hexandioldi(meth)acrylat. Verwendet werden können auch langkettige Monomere der US-3 066 112 auf der Basis von Bisphenol A und Glycidylmethacrylat oder deren durch Addition von Isocyanaten entstandenen Derivate. Geeignet sind auch Verbindungen des Typs Bisphenyl-A-diethyloxy(meth)acrylat und Bisphenol-Adipropyloxy(meth)acrylat. Weiterhin Verwendung finden können die oligoethoxylierten und oligopropoxylierten Bisphenol-A-diacryl und - dimethacrylsäureester. Gut geeignet sind außerdem die in der DE-C-28 16 823 genannten Diacryl- und Dimethacrylsäureester des Bis(hydroxymethyl)-tricyclo[5.2.1.0^{2.6}]-decans und die Diacryl- und Dimethacrylsäureester der mit 1 bis 3 Ethylenoxid- und/oder Propylenoxideinheiten verlängerten Verbindungen des Bis(hydroxymethyl)-tricyclo[5.2.1.0^{2,6}]-decans.

Die Herstellung der hier offenbarten Dentalmassen erfolgt vorzugsweise so, daß die flüssigen Bestandteile miteinander gemischt werden, die Initiatoren, sofern sie nicht flüssig sind, darin durch Rühren eingelöst werden und anschließend die Füllstoffe zugegeben werden und durch Kneten gut homogenisiert wird.

Zweikomponentige Zubereitungen, deren Aushärtung durch Redox-Mechanismen erfolgt, werden so formuliert, daß die wesentlichen Bestandteile des Redoxlnitiierungssystems getrennt in je einem Teil der zweikomponentigen Zubereitung eingebracht werden. Die Aufteilung der Bestandteile der Gesamtzubereitung richtet sich nach den jeweiligen Lagerbeständigkeiten und dem angestrebten Mischungsverhältnis.

Die folgenden Beispiele erläutern die Erfindung, ohne daß diese dadurch beschränkt sein soll.

### Darstellung eines Vertreters von (5)

### 1-(Trimethoxysilylethyl)-1,3,5,7-tetramethylcyclotetrasiloxan

962 g 1,3,5,7-Tetramethylcyclotetrasiloxan werden in 800 ml Toluol mit Karstedt-Katalysator (3-3,5 % Pt, 300 ppm Pt, ABCR) vorgelegt und bei 70°C gerührt. 296,4 g Vinyltrimethoxysilan (Wacker) wird innerhalb fünf Stunden zugetropft. Nach weiteren 24 Stunden Rühren wird der Ansatz fraktioniert destilliert.

### Darstellung von Vertretern von (1)

### 1-(Trimethoxysilylethyl)-3,5,7-tris(3-methacryloxypropyl)-1,3,5,7-tetramethylcyclotetrasiloxan (V1)

47,3 g Allylmethacrylat und 100 ml Toluol gelöst und mit Karstedt-Katalysator (3-3,5 % Pt, 300 ppm Pt, ABCR) auf 70°C erhitzt. 38,9 g (V1) werden innerhalb 3 Stunden zugetropft. Nach weiteren 12 Stunden Rühren wird das Lösungsmittel abdestilliert.

### 1-(Trimethoxysilylethyl)-3,5,7-tris(5-hexenyl)-1,3,5,7-tetramethylcyclotetrasiloxan

52,3 g 1,6-Hexadien werden in 100 ml Toluol gelöst und mit Karstedt-Katalysator (3-3,5 % Pt, 300 ppm Pt, ABCR) auf 70°C erhitzt. 27,5 g (V1) werden innerhalb 3 Stunden zugetropft. Nach weiteren 12 Stunden Rühren wird das Lösungsmittel und der Überschuß Hexadien abdestilliert. Das Produkt wird fraktioniert destilliert.

### 1-(Trimethoxysilylethyl)-3,5,7-tris(3-ethylen-oxabicyclo[4.1.0]heptan)yl)-1,3,5,7-tetramethylcyclotetrasiloxan

24,5 Vinylcyclohexenepoxid werden in 100 ml Toluol gelöst und mit Karstedt-Katalysator (3-3,5 % Pt, 300 ppm Pt, ABCR) auf 70°C erhitzt. 25,6 g (V1) werden innerhalb 3 Stunden zugetropft. Nach weiteren 12 Stunden Rühren wird das Lösungsmittel abdestilliert.

### Darstellung einer harzartigen Zusammensetzung

Eine Lösung von (V1) in Diethylether wird mit 1,5 Mol pro Mol (V1) Wasser (eingesetzt als 0,1 n HCI) pro Mol Silan hydrolysiert und kondensiert. Anschließend wäscht man die Etherlösung mit kleinen Portionen Wasser bis zum Neutralpunkt. Nach dem Trocknen der Lösung wird das Lösungsmittel abgezogen und der verbleibende viskose Rückstand im Hochvakuum getrocknet.

### Herstellung der Dentalzubereitungen

Für die Herstellung der erfindungsgemäßen Dentalzubereitungen wurden die in Tabelle 1 charakterisierten organisch / anorganischen Prepolymeren verwendet.

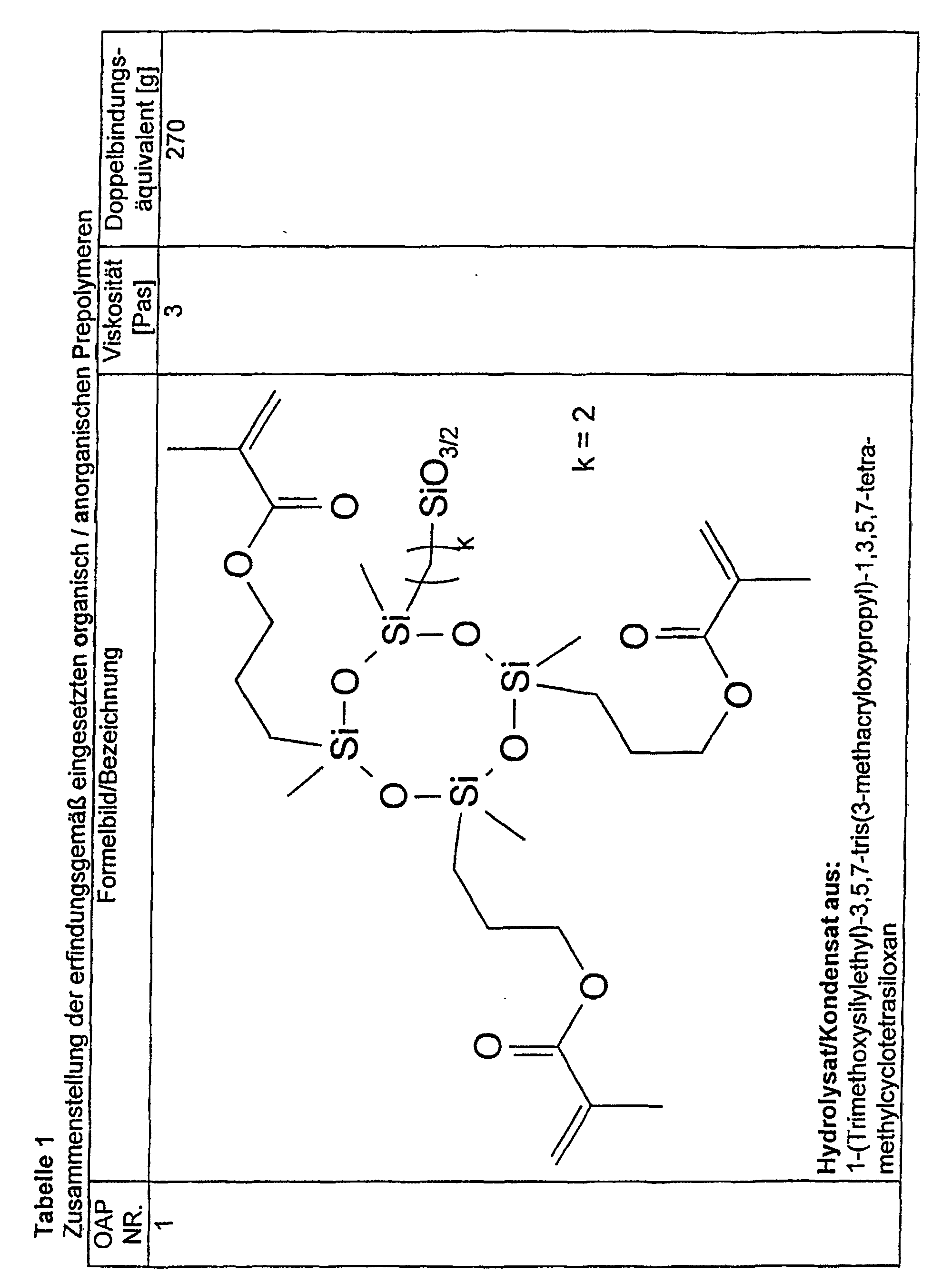

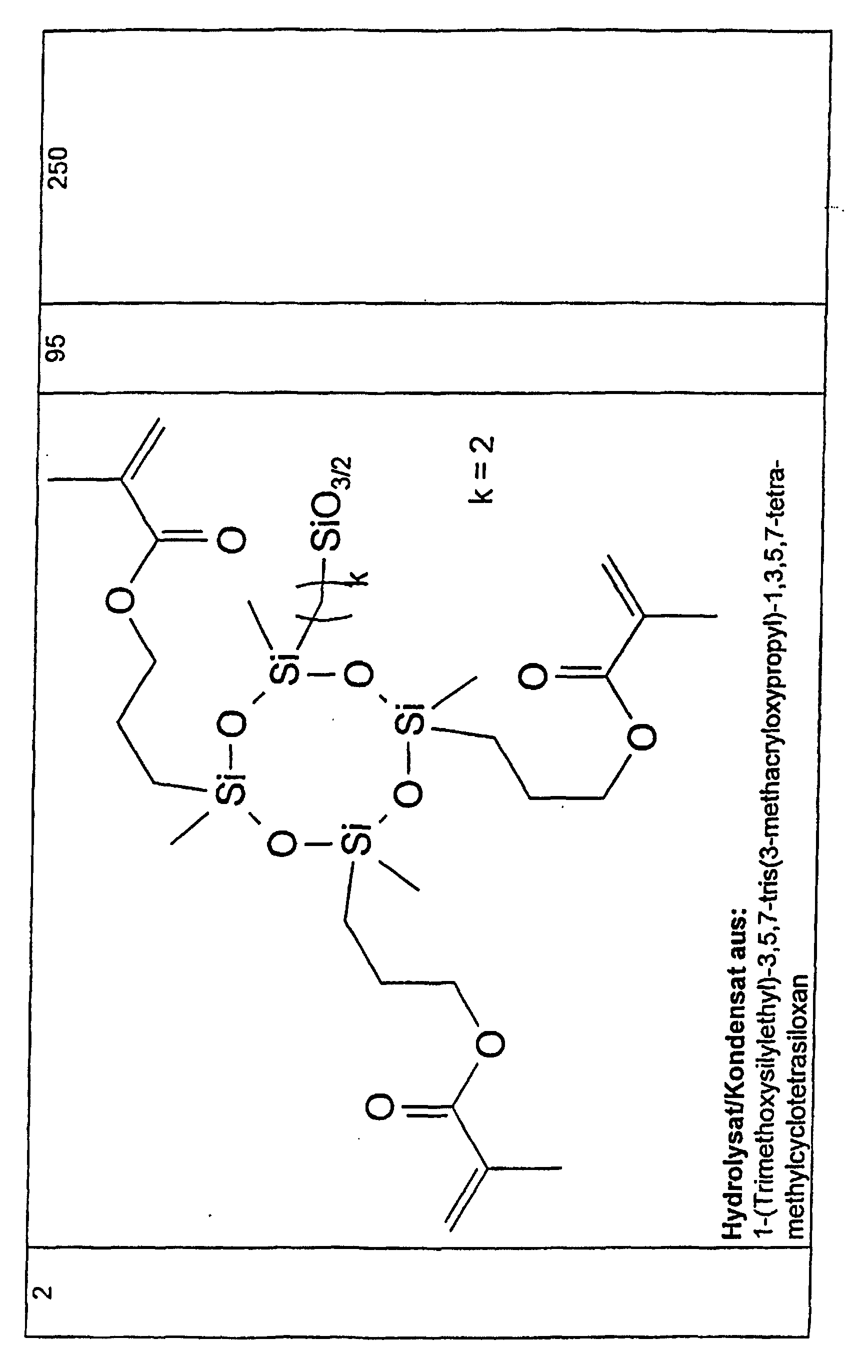

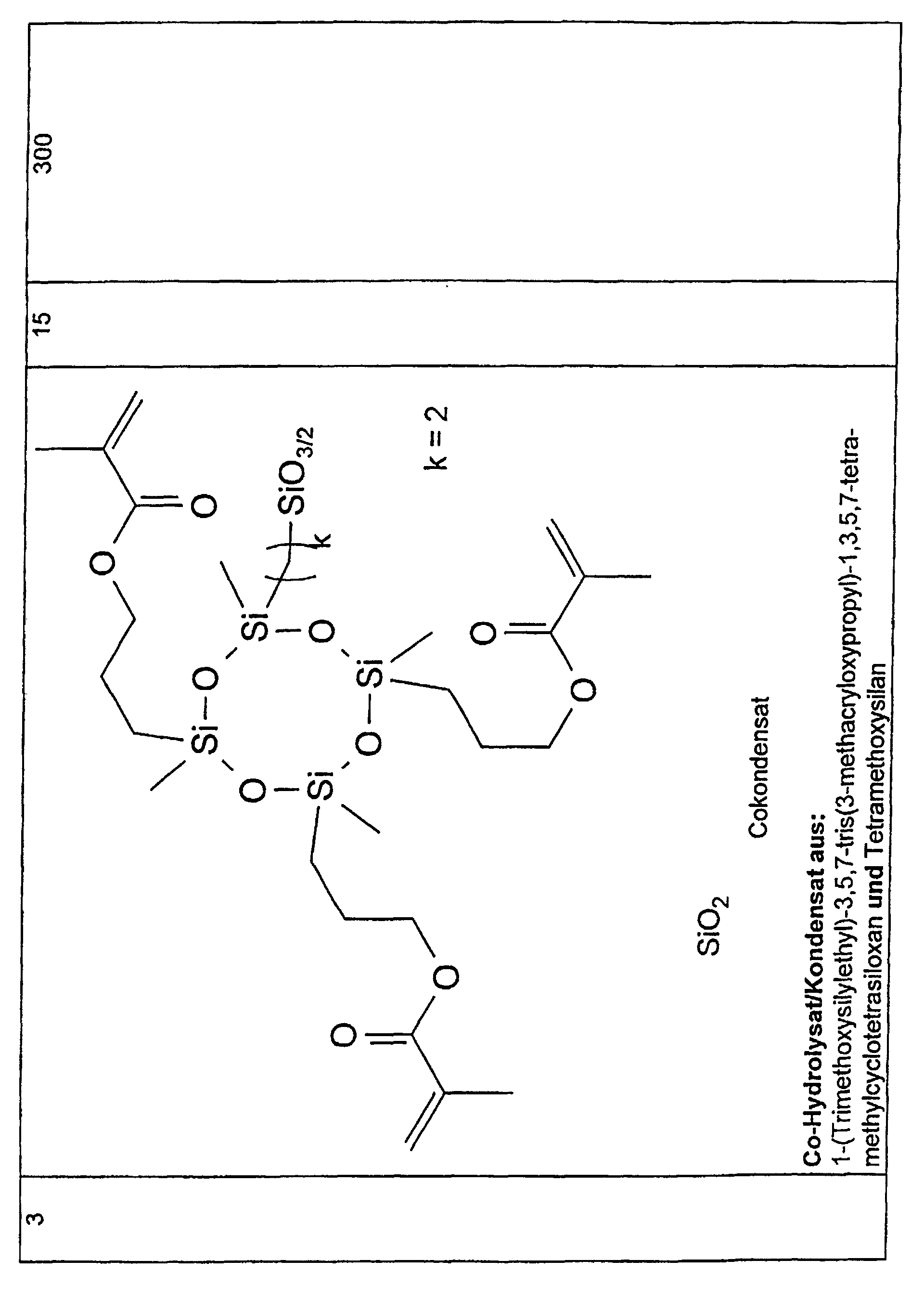

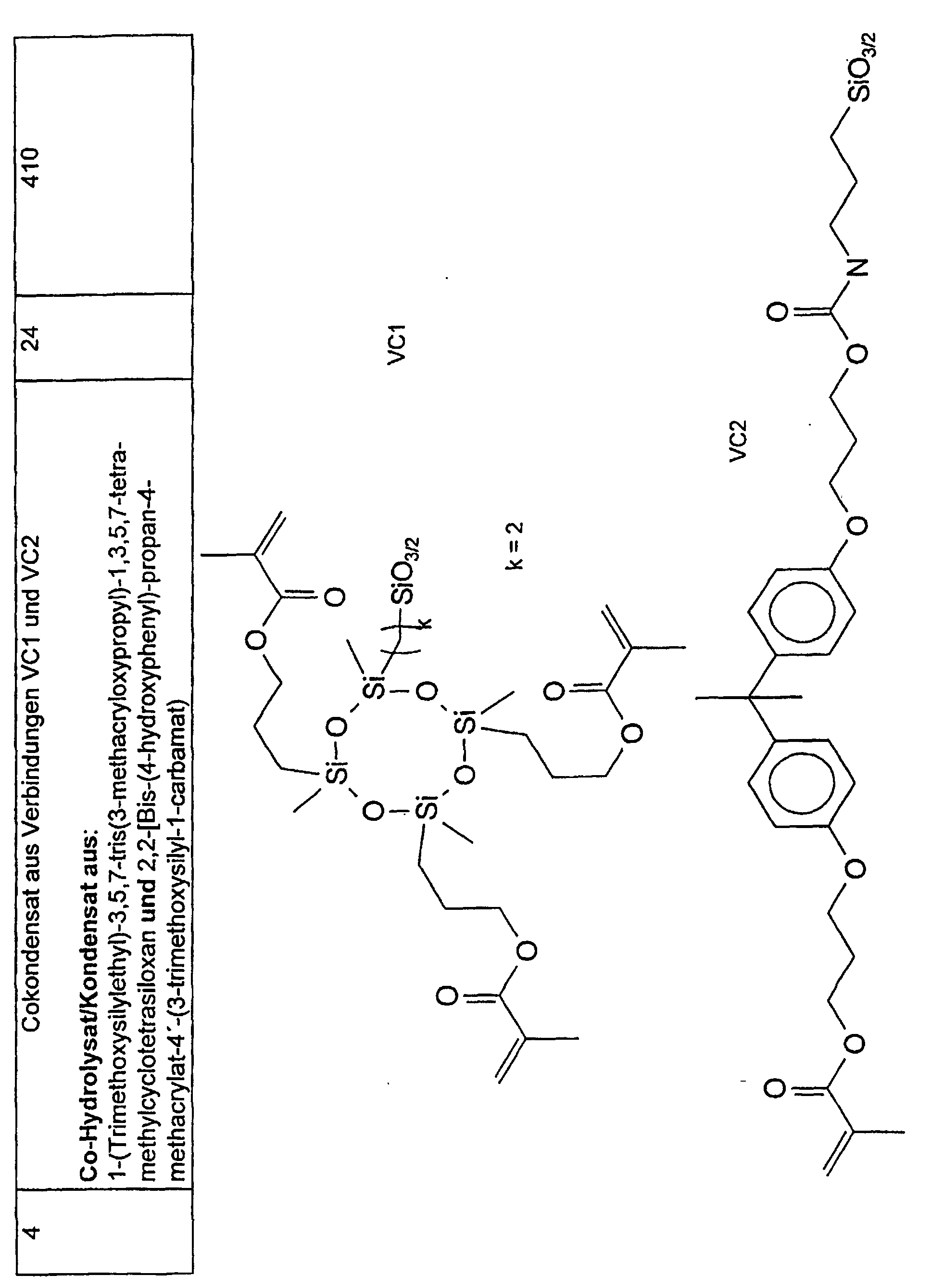

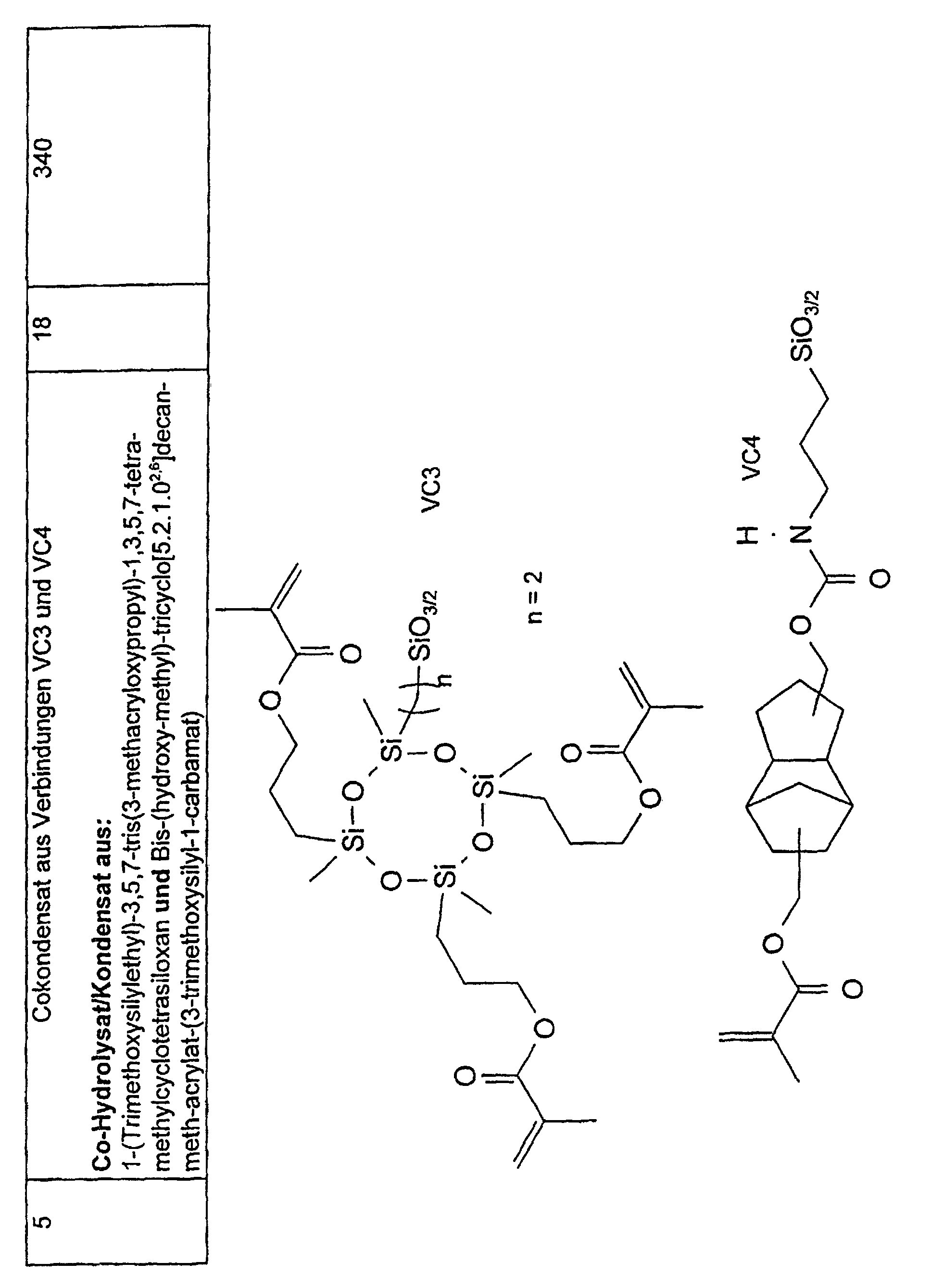

In einem 100 ml-Laborkneter wurden die pastenförmigen Zubereitungen gemäß den Patentbeispielen 1 bis 9, deren Zusammensetzungen in Tabelle 2 beschrieben sind, hergestellt.

Die Zubereitungen wurden hinsichtlich Druckfestigkeit sowie Biegefestigkeit und E-Modul gemäß DIN ISO 4049 charakterisiert.

Die Herstellung der Prüfkörper erfolgte durch 40 Sekunden Bestrahlung der in Formen eingebrachten pastenförmigen Zubereitungen mit dem Lichtgerät Elipar II der Firma ESPE Dental AG, Deutschland.

Die Prüfkörper wurden nach der Entformung für einen Zeitraum von 24 Stunden in deionisiertes Wasser bei 36° C eingelagert und danach die mechanischen Eigenschaften ermittelt.

Durch Bestimmung der Dichten der pastenförmigen Zubereitungen und der ausgehärteten Massen nach der Auftriebsmethode wurde der bei der radikalischen Polymerisation eintretende Volumenschrumpf festgestellt.

Eine Zusammenstellung der an den ausgehärteten Zubereitungen gemäß den Erfindungsbeispielen 1 bis 9 ermittelten Eigenschaftswerten enthält Tabelle 3.

### Vergleichsbeispiel 1

Die Herstellung und Charakterisierung der Vergleichs-Zubereitung erfolgt wie bei den Patentbeispielen vorstehend beschrieben.

Tabelle 2 enthält die Zusammensetzung der pastenförmigen Zubereitungen gemäß Vergleichsbeispiel. Die Ergebnisse der Ermittlung der Eigenschaftswerte sind in Tabelle 3 enthalten. Die erfindungsgemäßen Zubereitungen zeigen gegenüber der Vergleichszubereitung einen deutlich erniedrigten Volumenschrumpf bei etwa gleichen Werten der mechanischen Fertigkeit.

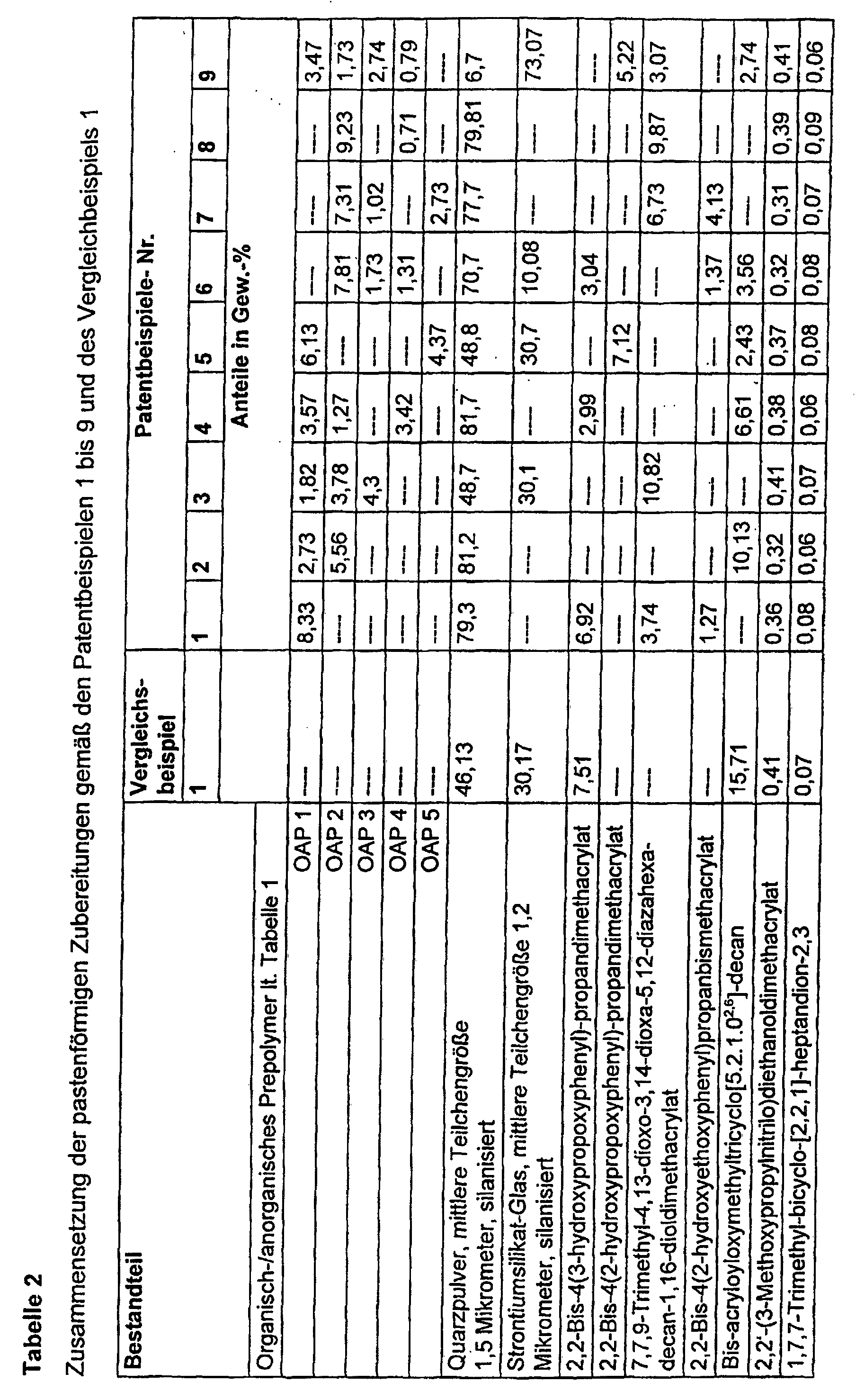

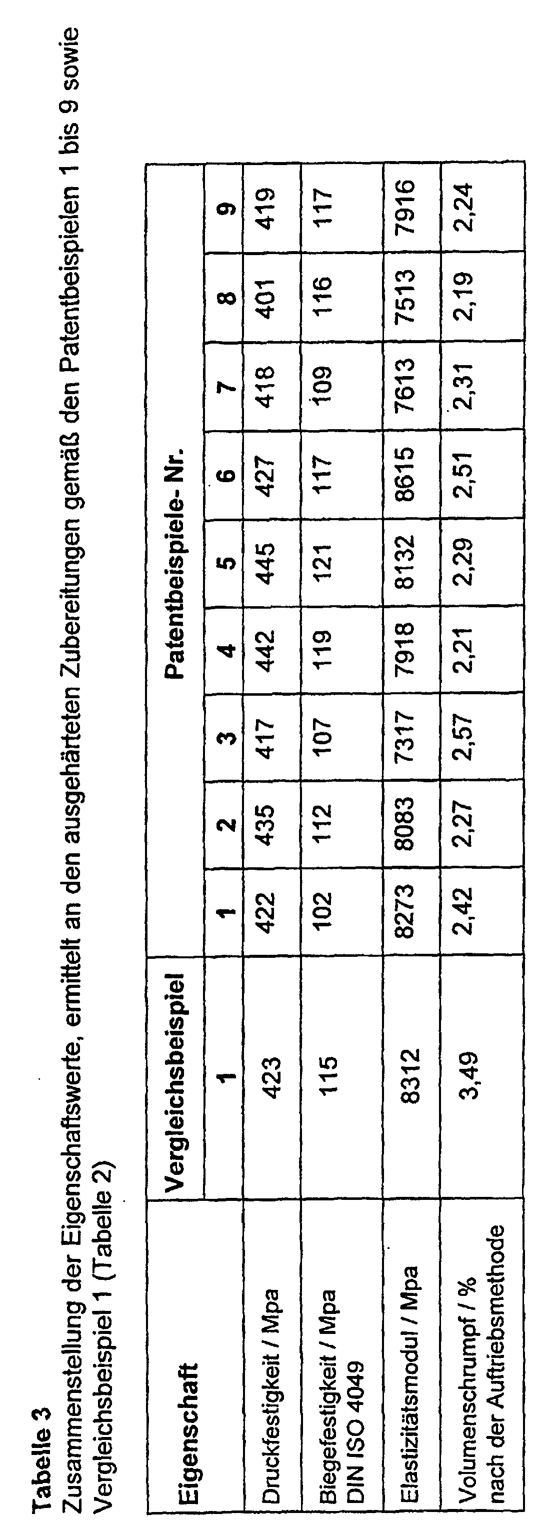

## Patentansprüche

1. Polysiloxane, erhältlich durch Sol-Gel-Kondensation von
A1. 60 bis 100 Mol-%, bezogen auf das Kondensat aus A1, A2 und A3, Monomeren oder Präkondensaten von Sol-Gel-kondensierbaren cyclischen Siloxanen der allgemeinen Formel (1) 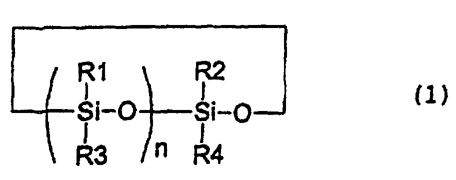 in welcher bedeuten:
R¹, R²: Alkyl mit 1 bis 10 C-Atomen, Alkenyl mit 1 bis 10 C-Atomen, Fluoralkyl mit 1 bis 10 C-Atomen, Cycloalkyl mit 3 bis 12 C-Atomen, Aryl mit 6 bis 18 C-Atomen,
R³: R⁵-Z,
R⁴: R⁶-(A-R⁶)_{c}-SiXₐR⁷_{b},
R⁵, R⁶: Alkylen linear oder verzweigt mit 1 bis 10 C-Atomen, Alkenylen linear oder verzweigt mit 1 bis 10 C-Atomen, Cycloalkylen mit 3 bis 12 C-Atomen, Cycloalkenylen mit 3 bis 12 C-Atomen, Alkarylen mit 6 bis 18 C-Atomen mit bis zu 3 Heteroatomen aus der Gruppe O, N, S,
R⁷: Alkyl mit 1 bis 10 C-Atomen, Alkenyl mit 1 bis 10 C-Atomen, Aryl mit 6 bis 18 C-Atomen, Alkylaryl mit 6 bis 24 C-Atomen, Arylalkyl mit 6 bis 24. C-Atomen,
Z: ein geradkettiger, verzweigter oder cyclischer organischer Rest mit mindestens einer C=C-Doppelbindung oder mindestens einer Epoxid-Funktion und mindestens 4 bis 50 Kohlenstoffatomen und bis zu 10 Heteroatomen aus der Gruppe O, N und S,
A : O, S, NHC(O)O, NHC(O)NR⁸, OC(O)NH, OC(O), C(O)O,
X: H, Halogen, Hydroxy, Acyloxy, Alkylcarbonyl, NR⁸₂, Alkoxy, Alkoxycarbonyl, wobei die Acyl-, Alkyl- und Alkoxyreste 1 bis 10 C-Atome aufweisen,
R⁸: H, Alkyl mit 1 bis 10 C-Atomen, Aryl mit 6 bis 18 C-Atomen,
n: 2 bis 16,
a: 1, 2 oder 3,
b: 0, 1 oder 2,
mit der Maßgabe, daß a + b = 3, und
c: 0 oder 1,
A2. 0 bis 40 Mol-%, bezogen auf das Kondensat aus A1, A2 und A3, organischen Sol-Gel-kondensierbaren Monomeren, und
A3. 0 bis 40 Mol-%, bezogen auf das Kondensat aus A1, A2 und A3, einer oder mehrerer Sol-Gel-kondensierbarer Verbindungen des Siliciums und gegebenenfalls anderer Elemente aus der Gruppe B, Al, P, Sn, Pb, der Übergangsmetalle, der Lanthaniden und der Aktiniden,
wobei die Summe der Mengen aus A2 und A3 40 Mol-% nicht überschreiten darf und die Mengen von A1, A2 und A3 sich zu 100 Mol-% ergänzen müssen.

2. Polysiloxane, erhältlich durch Sol-Gel-Kondensation von 100 Mol-% Komponente A1.

3. Polysiloxane, erhältlich durch Sol-Gel-Kondensation von
A1. 60 bis 100 Mol-%, bezogen auf das Kondensat aus A1 und A2, Monomeren oder Präkondensaten der Sol-Gel-kondensierbaren cyclischen Siloxane nach Anspruch 1 und
A2. 0 bis 40 Mol-%, bezogen auf das Kondensat aus A1 und A2, organischen Sol-Gel-kondensierbaren Monomeren,
wobei die Vertreter der Komponente A2 der Formel (2) folgen:
{YₑR_{f}Si[R'(B)_{g}]_{(4-e-f)}}ₓC (2)
in der die Reste und Indices folgende Bedeutung haben:
Y: Wasserstoff, Halogen, Hydroxy, Alkoxy, Acyloxy, Alkylcarbonyl, Alkoxycarbonyl oder -NR"₂;
R: Alkyl, Alkenyl, Aryl, Alkylaryl oder Arylalkyl;
R': Alkylen, Arylen oder Alkylenarylen:
R": Wasserstoff, Alkyl oder Aryl;
B: O, S, PR", POR", NHC(O)O oder NHC(O)NR";
C: geradkettiger oder verzweigter oder cyclischer oder polycyclischer organischer Rest, der mindestens eine C=C-Doppelbindung aufweist, aus 5 bis 70 besteht und 0 bis 20 Heteroatome aus der Gruppe O, N, S aufweist;
e: 1, 2 oder 3;
f: 0, 1 oder 2;
g: 0 oder 1;
x: eine ganze Zahl, deren Maximalwert der Anzahl von Doppelbindungen in der Verbindung C minus 1 entspricht oder gleich der Anzahl von Doppelbindungen in der Verbindung C ist, wenn g = 1 und B für NHC(O)O oder NHC(O)NR" steht.

4. Harze, erhältlich durch partielle oder vollständige Hydrolyse der Gruppen X von Vertretern der Siloxane nach Anspruch 1 und anschließender partieller oder vollständiger Kondensation unter fakultativer partieller oder vollständiger Absättigung der verbliebenen Si-OH-Gruppen mit R⁹R¹⁰R¹¹Si-Gruppen, wobei R⁹, R¹⁰ und R¹¹ gleiche oder verschiedene Alkyl- oder Alkenylgruppen mit 1 bis 10 C-Atomen bedeuten.

5. Cokondensate der partiell oder vollständig hydrolysierten Siloxane nach Anspruch 1 mit Vertretern der Klasse A3, insbesondere mit Si-, Ti- oder Zr-Alkoxiden und/oder mit substituierten Monoalkyltrialkoxysilanen.

6. Polykondensate nach Anspruch 1 mit hydrolysierbaren Aluminiumverbindungen gemäß Komponente A3 nach der allgemeinen Formel (8):
AIX'₃ (8)
in der die Reste X', die gleich oder verschieden sein können und ausgewählt sind aus der Gruppe Halogen, Alkoxy, Alkoxycarbonyl und Hydroxy.

7. Polykondensate nach den Ansprüchen 1 oder 5 mit hydrolysierbaren Titan- und Zirkoniumverbindungen gemäß Komponente A3 der allgemeinen Formel (9):
MX_{a'}R¹³ _{b'} (9)
in der M Ti oder Zr bedeutet und X, R¹³, a' und b' wie im Falle der allgemeinen Formel (7) definiert sind.

8. Verwendung von Polysiloxanen nach den Ansprüchen 1 bis 3, von Harzen nach Anspruch 4, von Cokondensaten nach Anspruch 5 und von Polykondensaten nach den Ansprüchen 6 oder 7 zur Herstellung von Dentalmassen.

9. Dentalmassen, enthaltend
(A) 0,1 bis 40 Masseteile Polysiloxane nach Anspruch 1 und / oder Harze nach Anspruch 4 und / oder Cokondensate nach Anspruch 5,
(B) 0 bis 20 Masseteile von mindestens einem Co-Monomer,
(C) 40 bis 90 Masseteile feinteilige anorganische und / oder organische Füllstoffe,
(D) 0,1 bis 5 Masseteile eines Initiatorsystems, das zur Bildung freier Radikale befähig ist,
(E) 0 bis 20 Masseteile Modifikatoren,
wobei die Summe der Massetelle 100 beträgt.

## Claims

1. Polysiloxanes, obtainable by sol-gel condensation of
A1. 60 to 100 mol.-%, relative to the condensate from A1, A2 and A3, monomers or precondensates of sol-gel-condensable cyclic siloxanes of the general formula (1), 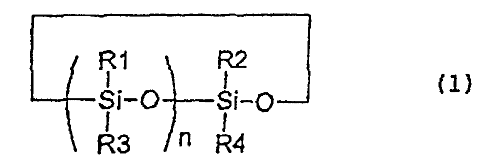 in which the following mean:
R¹, R²: alkyl with 1 to 10 C atoms, alkenyl with 1 to 10 C atoms, fluoroalkyl with 1 to 10 C atoms, cycloalkyl with 3 to 12 C atoms, aryl with 6 to 18 C atoms.,
R³: R⁵-Z
R⁴: R⁶-(A-R⁶)_{C}-SIXₐR⁷_{b},
R⁵, R⁶: alkylene linear or branched with 1 to 10 C atoms, alkenylene linear or branched with 1 to 10 C atoms, cycloalkylene with 3 to 12 C atoms, cycloalkenylene with 3 to 12 C atoms, alkarylene with 6 to 18 C atoms with up to 3 heteroatoms from the group O, N, S,
R⁷: alkyl with 1 to 10 C atoms, alkenyl with 1 to 10 C atoms, aryl with 6 to 18 C atoms, alkylaryl with 6 to 24 C atoms, arylalkyl with 6 to 24 C atoms.
Z: a linear, branched or cyclic organic radical with at least one C=C double bond or at least one epoxide function and at least 4 to 50 carbon atoms and up to 10 heteroatoms from the group O, N and S,
A: O, S, NHC(O)O, NHC(O)NR⁸, OC(O)NH, OC(O), C(O)O,
X: H, halogen, hydroxy, acyloxy, alkylcarbonyl, NR⁸₂, alkoxy, alkoxycarbonyl, the acyl, alkyl and alkoxy radicals containing 1 to 10 C atoms,
R⁸: H, alkyl with 1 to 10 C atoms, aryl with 6 to 18 C atoms,
n: 2 to 16,
a: 1, 2 or 3,
b: 0, 1 or 2,
with the proviso that a + b = 3, and
c: 0 or 1,
A2. 0 to 40 mol.-%, relative to the condensate from A1, A2 and A3, of organic sol-gel-condensable monomers, and
A3. 0 to 40 mol.-%, relative to the condensate from A1, A2 and A3, of one or more sol-gel-condensable compounds of silicon and optionally other elements from the group B, Al, P, Sn, Pb, the transition metals, the lanthanides and aktinides,
where the sum of the amounts from A2 and A3 may not exceed 40 mol.-% and the amounts of A1, A2 and A3 must be made up to 100 mol.-%.

2. Polysiloxanes, obtainable through sol-gel condensation of 100 mol.-% component A1.

3. Polysiloxanes, obtainable by sol-gel-condensation of
A1. 60 to 100 mol.-%, relative to the condensate from A1 and A2, monomers or precondensates of the sol-gel-condensable cyclic siloxanes according to claim 1 and
A2. 0 to 40 mol.-%, relative to the condensate from A1 and A2, organic sol-gel-condensable monomers,
where the representatives of component A2 obey formula (2):
{YₑR_{f}Si[R'(B)_{g}]_{(4-e-f)}}ₓC (2)
in which the radicals and the indices have the following meaning:
Y: hydrogen, halogen, hydroxy, alkoxy, acyloxy, alkylcarbonyl, alkoxycarbonyl or-NR"₂;
R: alkyl, alkenyl, aryl, alkylaryl or arylalkyl;
R': alkylene, arylene or alkylenearylene:
R": hydrogen, alkyl or aryl;
B: O, S, PR", POR", NHC(O)O or NHC(O)NR";
C: linear or branched or cyclic or polycyclic organic radical, which contains at least one C=C double bond, consists of 5 to 70 carbon atoms and contains 0 to 20 heteroatoms from the group 0, N, S;
e: 1, 2 or 3;
f: 0, 1 or 2;
g: 0 or 1;
x: an integer, the maximum value of which corresponds to the number of double bonds in the compound C minus 1 or is equal to the number of double bonds in the compound C, if g = 1 and B stands for NHC(O)O or NHC(O)NR".

4. Resins, obtainable by partial or complete hydrolysis of the groups X of representatives of the siloxanes according to claim 1 and subsequent partial or complete condensation with optional partial or complete saturation of the remaining Si-OH groups with R⁹R¹⁰R¹¹Si groups, R⁹, R¹⁰ and R¹¹ meaning the same or different alkyl or alkenyl groups with 1 to 10 C atoms.

5. Co-condensates of the partially or completely hydrolyzed siloxanes according to claim 1 with representatives of the class A3, in particular with Si, Ti or Zr alkoxides and/or with substituted monoalkyltrialkoxysilanes.

6. Polycondensates according to claim 1 with hydrolyzable aluminium compounds according to component A3 according to the general formula (8):
AlX'₃ (8)
in which the radicals X' which can be the same or different and are chosen from the group halogen, alkoxy, alkoxycarbonyl and hydroxy.

7. Polycondensates according to claims 1 or 5 with hydrolyzable titanium and zirconium compounds according to component A3 of the general formula (9):
MX_{a'}R¹³ _{b'} (9)
in which M means Ti or Zr and X, R¹³, a' and b' are defined as in the case of the general formula (7).

8. Use of polysiloxanes according to claims 1 to 3, of resins according to claim 4, of co-condensates according to claim 5 and of polycondensates according to claims 6 or 7 for the preparation of dental compositions.

9. Dental compositions containing
(A) 0.1 to 40 parts by mass polysiloxanes according to claim 1 and/or resins according to claim 4 and/or co-condensates according to claim 5,
(B) 0 to 20 parts by mass at least one co-monomer,
(C) 40 to 90 parts by mass fine-particled inorganic and/or organic fillers,
(D) 0.1 to 5 parts by mass an initiator system which is capable of forming free radicals,
(E) 0 to 20 parts by mass modifiers,
where the sum of the parts by mass is 100.

## Revendications

1. Polysiloxanes pouvant être obtenus par condensation au moyen du procédé sol-gel de
A1. de 30 à 100 % en moles, par rapport au condensat formé de A1, A2 et A3, de monomères ou de précondensats de siloxanes cycliques, condensables au moyen du procédé sol-gel, de formule générale (1) 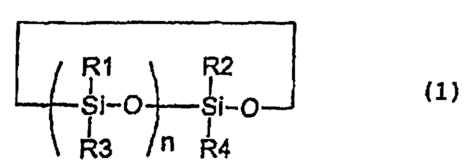 dans laquelle :
R¹, R² signifient un groupe alkyle ayant de 1 à 10 atomes de carbone, un groupe alcényle ayant de 1 à 10 atomes de carbone, un groupe fluoroalkyle ayant de 1 à 10 atomes de carbone, un groupe cycloalkyle ayant de 3 à 12 atomes de carbone, un groupe aryle ayant de 6 à 18 atomes carbone,
R³ signifie R⁵-Z,
R⁴ signifie R⁶-(A-R⁶)_{c}-SiXₐR⁷_{b},
R⁵, R⁶ signifient un groupe alkylène, linéaire ou ramifié, ayant de 1 à 10 atomes de carbone, un groupe alcénylène, linéaire ou ramifié, ayant de 1 à 10 atomes de carbone, un groupe cycloalkylène ayant de 3 à 12 atomes de carbone, un groupe cycloalcénylène ayant de 3 à 12 atomes de carbone, un groupe alkarylène ayant de 6 à 18 atomes de carbone avec jusqu'à 3 hétéroatomes choisis dans l'ensemble constitué de O, N, S,
R⁷ signifie un groupe alkyle ayant de 1 à 10 atomes de carbone, un groupe alcényle ayant de 1 à 10 atomes de carbone, un groupe aryle ayant de 6 à 18 atomes de carbone, un groupe alkylaryle ayant de 6 à 24 atomes de carbone,
z signifie un reste organique linéaire, ramifié ou cyclique ayant au moins une liaison double C=C ou au moins une fonction époxyde et au moins 4 à 50 atomes de carbone et jusqu'à 10 hétéroatomes choisis dans l'ensemble constitué de O, N, S,
A signifie O, S, NHC(O)O, NHC(O)NR⁸, OC(O)NH, OC(O), C(O)O,
X signifie H, un halogène, un groupe hydroxy, acyloxy, alkylcarbonyle, NR⁸₂, alkoxy, alkoxycarbonyle, les restes acyle, alkyle et alkoxy présentant de 1 à 10 atomes de carbone,
R⁸ signifie H, un groupe alkyle ayant de 1 à 10 atomes de carbone, un groupe aryle ayant de 6 à 18 atomes de carbone,
n signifie de 2 à 16,
a signifie 1, 2 ou 3,
b signifie 0, 1 ou 2,
avec la condition que a + b = 3, et
c signifie 0 ou 1,
A2. de 0 à 40 % en moles, par rapport au condensat formé de A1, A2 et A3, de monomères condensables au moyen du procédé sol-gel, et
A3. de 0 à 40 % en moles, par rapport au condensat formé de A1, A2 et A3, d'un ou plusieurs composés du silicium condensables au moyen du procédé sol-gel et, le cas échéant, d'autres éléments de l'ensemble constitué de B, Al, P, Sn, Pb, des métaux de transition, des lanthanides et des actinides,
la somme des quantités de A2 et A3 ne devant pas dépasser 40 % en moles, et les quantités de A1, A2 et A3 devant se compléter jusqu'à 100 % en moles.

2. Polysiloxanes pouvant être obtenus par condensation au moyen du procédé sol-gel de 100 % en moles de composant A1.

3. Polysiloxanes pouvant être obtenus par condensation au moyen du procédé sol-gel de
A1. 60 à 100 % en moles, par rapport au condensat formé de A1 et A2, de monomères ou de précondensats des siloxanes cycliques condensables au moyen du procédé sol-gel selon la revendication 1 et
A2. 0 à 40 % en moles, par rapport au condensat formé de A1 et A2, de monomères organiques condensables au moyen du procédé sol-gel,
des exemples représentatifs de composant A2 de formule (2) étant comme suit :
{YₑR_{f}Si[R' (B_{g})] _{(4-e-f)}}ₓC (2)
dans laquelle les restes et indices ont la signification suivante :
Y : hydrogène, halogène, hydroxy, alkoxy, acyloxy, alkylcarbonyle, alkoxycarbonyle ou -NR"₂ ;
R : alkyle, alcényle, aryle, alkylaryle ou arylalkyle ;
R' : alkylène, arylène ou alkylène-arylène ;
R" : hydrogène, alkyle ou aryle ;
B : O, S, PR", POR", NHC(O)O ou NHC(O)NR" ;
C : reste organique linéaire ou ramifié ou cyclique ou polycyclique qui contient au moins une liaison double C=C, qui contient de 5 à 70 atomes de carbone et de 0 à 20 hétéroatomes choisis dans l'ensemble constitué de O, N, S ;
e : 1, 2 ou 3 ;
f : 0, 1 ou 2 ;
g : 0 ou 1 ;
x : nombre entier dont la valeur maximale correspond au nombre de liaisons doubles dans le composé C moins 1 ou qui est égale au nombre de liaisons doubles dans le composé C quand g = 1 et quand B représente NHC(O)O ou NHC(O)NR".

4. Résines pouvant être obtenues par hydrolyse partielle ou complète des groupes X d'exemples représentatifs des siloxanes selon la revendication 1, suivie d'une condensation partielle ou complète, le cas échéant avec saturation partielle ou complète des groupes Si-OH restants avec des groupes R⁹R¹⁰R¹¹Si, les groupes R⁹, R¹⁰ et R¹¹ signifiant des groupes alkyle ou alcényle identiques ou différents ayant de 1 à 10 atomes de carbone.

5. Co-condensats des siloxanes partiellement ou complètement hydrolysés selon la revendication 1 avec des représentants de la classe A3, en particulier avec des alcoolates de Si, Ti ou Zr, et/ou avec des monoalkyltrialkoxysilanes substitués.

6. Polycondensats selon la revendication 1 avec des composés hydrolysables de l'aluminium conformes au composant A3 selon la formule générale (8) :
AlX'₃ (8)
dans laquelle les restes X' peuvent être identiques ou différents et sont choisis dans l'ensemble constitué des halogènes et des groupes alkoxy, alkoxycarbonyle et hydroxy.

7. Polycondensats selon la revendication 1 ou 5 avec des composés hydrolysables du titane et du zirconium conformes au composant A3 de formule générale (9) :
MX_{a'}R¹³ _{b'} (9)
dans laquelle M signifie Ti ou Zr, et X, R¹³, a' et b' sont définis comme dans le cas de la formule générale (7).

8. Utilisation de polysiloxanes selon les revendications 1 à 3, de résines selon la revendication 4, de co-condensats selon la revendication 5 et de polycondensats selon la revendication 6 ou 7 pour la préparation de compositions dentaires.

9. Compositions dentaires contenant
(A) de 0,1 à 40 parties en poids de polysiloxanes selon la revendication 1 et/ou de résines selon la revendication 4 et/ou de co-condensats selon la revendication 5,
(B) de 0 à 20 parties en poids d'au moins un comonomère,
(C) de 40 à 90 parties en poids de charges inorganiques et/ou organiques finement divisées,
(D) de 0,1 à 5 parties en poids d'un système initiateur qui est capable de former des radicaux libres,
(E) de 0 à 20 parties en poids de modificateurs,
la somme des parties en poids valant 100.
